# EUROPEAN PATENT SPECIFICATION

(11) **EP 3 264 155 B1**
(45) Date of publication and mention of the grant of the patent: **23.09.2020**
(21) Application number: 17178097.6
(22) Date of filing: 27.06.2017
(51) Int. Cl.: G02B 26/08, G02B 26/10

(54) **PIEZOELECTRIC ACTUATOR, LIGHT DEFLECTOR, AND IMAGE PROJECTION DEVICE**
PIEZOELEKTRISCHES AKTUATOR, LICHTABLENKER UND BILDPROJEKTIONSVORRICHTUNG
ACTIONNEUR PIÉZOÉLECTRIQUE, DÉFLECTEUR DE LUMIÈRE ET DISPOSITIF DE PROJECTION D'IMAGE

(30) Priority: 29.06.2016 JP 2016128760; 20.04.2017 JP 2017083532
(43) Date of publication of application: 03.01.2018
(73) Proprietor: Ricoh Company, Ltd., Tokyo 143-8555 (JP)
(72) Inventor: SHINKAWA, Mizuki, Tokyo 143-8555 (JP); SUZUKI, Shuichi, Tokyo 143-8555 (JP)
(74) Representative: SSM Sandmair

(56) References cited:
- EP-A2- 2 146 236
- US-A1- 2010 309 536
- US-A1- 2015 062 683
- MASANAO TANI ET AL: "A two-axis piezoelectric tilting micromirror with a newly developed PZT-meandering actuator", MICRO ELECTRO MECHANICAL SYSTEMS, 2007. MEMS. IEEE 20TH INTERNATIONAL CONFERENCE ON, IEEE, PI, 25 January 2007 (2007-01-25), pages 699-702, XP031203748, DOI: 10.1109/MEMSYS.2007.4432994 ISBN: 978-1-4244-0950-1

## Description

### BACKGROUND OF THE INVENTION

### Field of the Invention

The present invention relates to a piezoelectric actuator, a light deflector, and an image projection device.

### Description of the Related Art

In recent years, piezoelectric actuators each including a piezoelectric body have been actively developed.

For example, a compact light deflection mirror manufactured by a micromachining technique based on a semiconductor manufacturing technique has been developed. This light deflection mirror serves as a Micro Electro Mechanical Systems (MEMS) device which is manufactured by microfabricating silicon or glass and integrally forming a movable part having a reflecting surface and an elastic beam-shaped part on a substrate, and the light deflection mirror deflects and scans light beams.

As an example of such a light deflection mirror, a piezoelectric actuator type in which piezoelectric materials that are thinned to beam-shaped elastic members for mirror driving are superimposed is known. In this structure, the expansion and contraction of the piezoelectric materials caused due to a piezoelectric effect are transmitted to a support body serving as a beam and the beam vibrates vertically, which causes the reflecting surface to be rotated.

Light deflection mirrors are rotated about two axes of a first axis (horizontal direction) and a second axis (perpendicular direction), which are orthogonal to each other, to enable two-dimensional optical scanning. In general, resonant driving using a mechanical resonant frequency is employed for optical scanning in the horizontal direction, and non-resonant driving is employed for optical scanning in the perpendicular direction.

At this time, the vibrating beam for implementing non-resonant driving generally includes a plurality of return parts and a plurality of coupling parts, and has a meander shape which is substantially formed of a plurality of continuous return shapes.

When bending displacements of coupling parts having such a meander shape are superimposed, electrodes located on the entire upper surface of a piezoelectric film cause a stress migration due to a large stress applied to the vibrating beam, which causes decoupling. In particular, a distortion stress is applied in the vicinity of a middle point on the inner periphery of the return parts due to vertical vibrations or the like of the coupling parts, and a bending stress is applied in the vicinity of a curvature change point due to a bending deformation or the like of the coupling parts. This causes a disadvantage that a particularly large stress is applied to the piezoelectric films or electrodes formed in the vicinity of the middle point on the inner periphery of the return parts or in the vicinity of the curvature change point.

WO 2012-111332 discloses a piezoelectric actuator in which a first electrode, a piezoelectric body, and a second electrode are provided in this order on a beam having an end coupled to a member.

More specifically, a solution to the above-mentioned disadvantage is disclosed as follows. That is, in the meander structure, a region in which no piezoelectric film is present is formed in at least one of the middle point on the inner periphery of each of the plurality of return parts and the vicinity thereof, and the curvature change point at which the curvature on the inner periphery of each of the plurality of return shapes changes and the vicinity thereof.

However, in the light deflector of the related art as disclosed in WO 2012-111332, a region in which no piezoelectric film is present is formed in the vicinity of the curvature change point, so that the shape is complicated due to deterioration in the degree of freedom of design of electrodes.

As a result, there is a disadvantage that adverse effects such as deterioration in the degree of freedom of design of the light deflector, deterioration in image quality due to an unintended scanning line fluctuation due to the complication of the electrode design, a light axis deviation of irradiated light, and vulnerability to an environmental vibration are caused. In other words, in the piezoelectric actuator of the related art, such as the piezoelectric actuator disclosed in the above-mentioned literature, there is a room for improvement for stably obtaining a desired power performance.

Accordingly, in order to solve the above-mentioned disadvantages, the present inventors have devised the following embodiments to achieve a movable device (light deflector) capable of reducing unwanted excitation vibrations that can be excited during the operation of the movable device and improving the stability of the operation for rotating the mirror part, while simplifying the electrode shape.

MASANO TANI ET AL: "A two-axis piezoelectric tilting micromirror with a newly developed PZT-meandering actuator", MICRO ELECTRO MECHANICAL SYSTEMS 2007. MEMS. IEEE 20TH INTERNATIONAL CONFERENCE ON, IEEE, PI, 1 January 2007 (2007-01-01), poages 699-702, XP031203748, DOI: 10.1109/MEMSYS.2007.4432994 discloses a mechanical design of a piezoelectric unimorph actuator that generates a large static deflection angle by accumulating angular displacement in a cascaded piezoelectric cantilever formed on a meandering shape.

US 2010/0309536 A1 discloses an optical deflector, including a fixed base; a mirror having a light reflection surface; a pair of elastic support members oscillatably supporting the mirror; and a pair of drive beams formed of a beam-shaped member on which a piezoelectric is fixed, wherein the elastic support members and the drive beams in longitudinal directions are almost orthogonally located and connected with each other, other ends of the drive beams are fixed on the fixed base, the mirror and the pair of elastic support members are cantilevered by the pair of drive beams relative to the fixed base, and bending oscillation of the drive beams causes torsional deformation of the elastic members to rotationally oscillate the mirror.

EP 2 146 236 A2 discloses a vibrating mirror element including a base member, a substrate made of metal, integrally formed with a mirror portion, a movable portion swingably supporting the mirror portion from both sides and functioning as a lower electrode, and a mounting portion supporting the movable portion and mounted on the base member, a piezoelectric film provided on the movable portion of the substrate and vibrating the mirror portion by application of a periodic voltage, and an upper electrode provided on the piezoelectric film.

US 2015/0062683 A1 discloses an optical deflection device which includes a mirror having a reflection face for deflecting light that enters the reflection face; and a support member to support the mirror including a torsion bar having one end being continuously connected to the mirror; a beam being continuously connected to another end of the torsion bar; and a plurality of piezoelectric elements disposed on the beam including a first piezoelectric element and a second piezoelectric element.

### SUMMARY OF THE INVENTION

The scope of the invention is defined by the appended claims. Any reference to "embodiment(s)", "example(s)" or "aspect(s) of the invention" in this description not falling under the scope of the claims should be interpreted as illustrative example(s) for understanding the invention.

According to the present invention, a desired power performance can be stably obtained.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic view illustrating an example of an optical scanning system;
FIG. 2 is a hardware configuration diagram illustrating an example of the optical scanning system illustrated in FIG. 2;
FIG. 3 is a functional block diagram illustrating an example of a control device;
FIG. 4 is a flowchart illustrating an example of a process related to an optical scanning system;
FIG. 5 is a schematic view illustrating an example of a vehicle on which a head-up display device is mounted;
FIG. 6 is a schematic view illustrating an example of the head-up display device;
FIG. 7 is a schematic view illustrating an example of an image forming device on which a light writing device is mounted;
FIG. 8 is a schematic view illustrating an example of the light writing device;
FIG. 9 is a schematic view illustrating an example of a vehicle having a laser radar device mounted;
FIG. 10 is a schematic view illustrating an example of the laser radar device;
FIG. 11 is a schematic view illustrating an example of a packaged movable device;
FIG. 12 is a plan view illustrating an example of the movable device as viewed along a +Z-direction;
FIGS. 13A to 13C are cross-sectional views taken along a line P-P' in FIG. 12. FIGS. 13A and 13B illustrate Comparative Examples 1 and 2, respectively, and FIG. 13C illustrates an example of an embodiment of the invention;
FIG. 14 is a cross-sectional view taken along a line Q-Q' in FIG. 12;
FIGS. 15A to 15C are cross-sectional views taken along a line R-R' in FIG. 12. FIGS. 15A and 15B illustrate Comparative Examples 1 and 2, respectively, and FIG. 15C illustrates an example of this embodiment;
FIGS. 16A to 16C are top views of an S-region illustrated in FIG. 12. FIGS. 16A and 16B illustrate Comparative Examples 1 and 2, respectively, and FIG. 16C illustrates an example of this embodiment;
FIGS. 17A to 17C are top views of a T-region illustrated in FIG. 12. FIGS. 17A and 17B illustrate Comparative Examples 1 and 2, respectively, and FIG. 17C illustrates an example embodiment;
FIGS. 18A to 18D are schematic views (Part 1 to Part 4) for explaining modified operations of a second drive part 130b of the movable device;
FIG. 19A illustrates an example of a waveform of a drive voltage A to be applied to a piezoelectric drive part group A of the movable device; FIG. 19B illustrates an example of a waveform of a drive voltage B to be applied to a piezoelectric drive part group B of the movable device; and FIG. 19C is a diagram illustrating that the waveform of the drive voltage illustrated in FIG. 19A and the waveform of the drive voltage illustrated in FIG. 19B are superimposed;
FIG. 20 is a schematic view schematically illustrating a distortion deformation of each of second piezoelectric actuation parts 131b to 131e and second support parts 141bc to 141de of the movable device;
FIG. 21 is a schematic view schematically illustrating an optical scanning locus of a biaxial light deflector;
FIG. 22 is a graph illustrating a resonant peak of a reflective mirror of the movable device;
FIG. 23 is a graph illustrating the resonant peak of the reflective mirror of the movable device; in which a solid line illustrates an example embodiment and a broken line illustrates a related art;
FIG. 24 illustrates an example of a movable device to which an embodiment of the present invention is applied;
FIG. 25 is an example of a movable device for light deflection to which an embodiment of the present invention is applied;
FIG. 26 illustrates an example of the movable device for light deflection to which an embodiment of the present invention is applied;
FIG. 27 illustrates an example of the movable device for light deflection to which an embodiment of the present invention is applied;
FIGS. 28A and 28B are diagrams for explaining modified examples (Part 1 and Part 2) of a first piezoelectric actuation part;
FIGS. 29A and 29B are diagrams for explaining modified examples (Part 3 and Part 4) of the first piezoelectric actuation part;
FIG. 30 is a diagram for explaining a modified example (Part 5) of the first piezoelectric actuation part;
FIGS. 31A and 31B are diagrams for explaining modified examples (Part 1 and Part 2) of a second piezoelectric actuation part;
FIGS. 32A and 32B are diagrams for explaining modified examples (Part 3 and Part 4) of the second piezoelectric actuation part;
FIG. 33 is a diagram for explaining a modified example (Part 6) of the first piezoelectric actuation part; and
FIG. 34 is a diagram for explaining a comparative example of the modified example (Part 6) of the first piezoelectric actuation part.

The accompanying drawings are intended to depict embodiments of the present invention and should not be interpreted to limit the scope thereof. The accompanying drawings are not to be considered as drawn to scale unless explicitly noted.

### DETAILED DESCRIPTION OF THE INVENTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Embodiments of the present invention will be described in detail below.

### [Optical Scanning System]

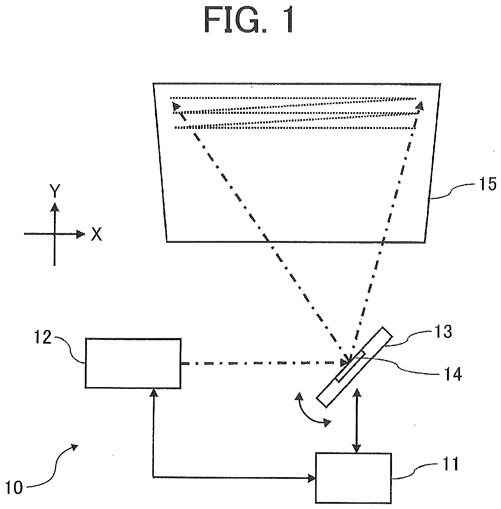

First, an optical scanning system to which a control device according to an embodiment of the invention is applied will be described in detail with reference to FIGS. 1 to 4.

FIG. 1 is a schematic view illustrating an example of an optical scanning system 10. As illustrated in FIG. 1, the optical scanning system 10 includes a control device 11, a light source device 12, and a movable device 13 including a reflecting surface 14.

The optical scanning system 10 is a system in which the reflecting surface 14 included in the movable device 13 deflects light emitted from the light source device 12 under control of the control device 11 to perform optical scanning on a surface to be scanned ("scanned surface") 15.

The control device 11 is an electronic circuit including, for example, a central processing unit (CPU) and a field-programmable gate array (FPGA). The movable device 13 includes, for example, the reflecting surface 14, and is a Micro Electromechanical Systems (MEMS) device capable of moving the reflecting surface 14. The light source device 12 is, for example, a laser device that emits laser. Note that the scanned surface 15 is, for example, a screen.

The control device 11 generates a control command for the light source device 12 and the movable device 13 based on the acquired optical scanning information, and outputs a drive signal to the light source device 12 and the movable device 13 based on the control command.

The light source device 12 performs irradiation of the light source based on the input drive signal. The movable device 13 allows the reflecting surface 14 to be movable in one axis direction or two axis directions based on the input drive signal.

Thus, for example, the reflecting surface 14 of the movable device 13 is allowed to be reciprocatingly movable in the two axis directions within a predetermined range by the control operation of the control device 11 based on image information, which is an example of optical scanning information, and light that enters the reflecting surface 14 and is emitted from the light source device 12 is deflected about a certain axis to perform optical scanning, so that any image can be projected on the scanned surface 15.

Note that details of the movable device 13 and details of the control by the control device 11 according to this embodiment will be described later.

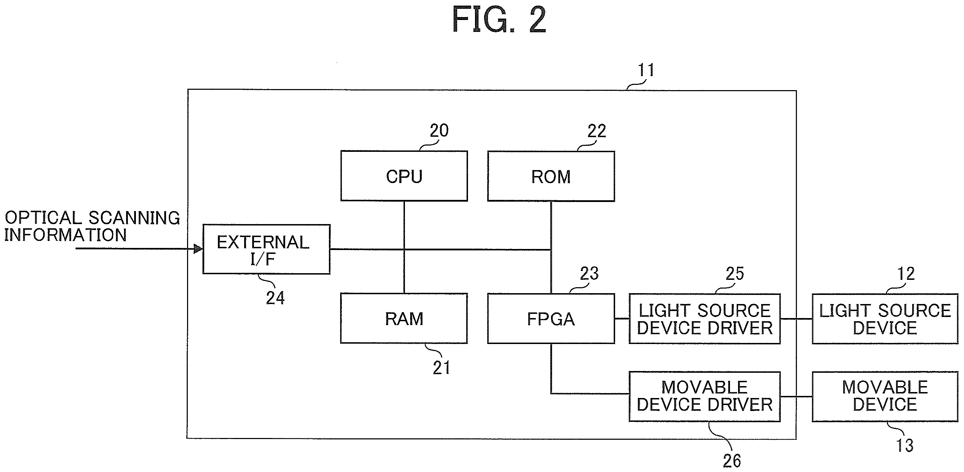

Next, an example of a hardware configuration of the optical scanning system 10 will be described with reference to FIG. 2. FIG. 2 is a hardware configuration diagram illustrating an example of the optical scanning system 10.

As illustrated in FIG. 2, the optical scanning system 10 includes the control device 11, the light source device 12, and the movable device 13, which are electrically coupled to each other.

Among these components, the control device 11 includes a CPU 20, a random access memory 21 (RAM), a read only memory 22 (ROM), an FPGA 23, an external interface (I/F) 24, a light source device driver 25, and a movable device driver 26.

The CPU 20 is a processor that controls operations or functions to be performed by the control device 11 according to programs and data read from a storage device such as the ROM 22 onto the RAM 21.

The RAM 21 is a volatile storage device that temporarily stores programs and data.

The ROM 22 is a non-volatile storage device capable of storing programs and data even after the power supply is turned off. The ROM 22 stores programs and data for processing executed for the CPU 20 to control the functions of the optical scanning system 10.

FPGA 23 is a circuit for outputting a control signal suitable for the light source device driver 25 and the movable device driver 26 in accordance with processing of the CPU 20.

The external I/F 24 is an interface with, for example, the external device 20 and a network. The external device 20 is, for example, a storage device including an upper device, such as a personal computer (PC), a universal serial bus (USB) memory, an SD card, a compact disc (CD), a digital versatile disc (DVD), a hard disk drive (HDD), or a solid state drive (SSD). The network is, for example, a controller area network (CAN) or local area network (LAN) of a vehicle, or the Internet. The external I/F 24 may have a structure capable of connecting or communicating with the external device 20. The external I/F 24 may be prepared for each external device 20.

The light source device driver is an electronic circuit that outputs a drive signal, such as a drive voltage, to the light source device 12 in accordance with the input control signal.

The movable device driver 26 is an electronic circuit that outputs a drive signal, such as a drive voltage, to the movable device 13 in accordance with the input control signal.

In the control device 11, the CPU 20 acquires optical scanning information from the external device 20 and the network via the external I/F 24. Note that the CPU 20 may be configured to be able to acquire the optical scanning information, store the optical scanning information in the ROM 22 or the FPGA 23 within the control device 11, or store the optical scanning information in a storage device, such as an SSD, which is newly provided in the control device 11.

In this case, the optical scanning information is information indicating how to perform optical scanning on the scanned surface 15. For example, when an image is displayed by optical scanning, the optical scanning information is image data. For example, when light is written by optical scanning, the optical scanning information is write data indicating a write order or a write section. In addition, for example, when object recognition is performed by optical scanning, the optical scanning information is irradiation data indicating an irradiation range and a timing when irradiation is performed with light for object recognition.

The control device 11 according to this embodiment implements the following functional structure according to the command of the CPU 20 and the hardware configuration illustrated in FIG. 2.

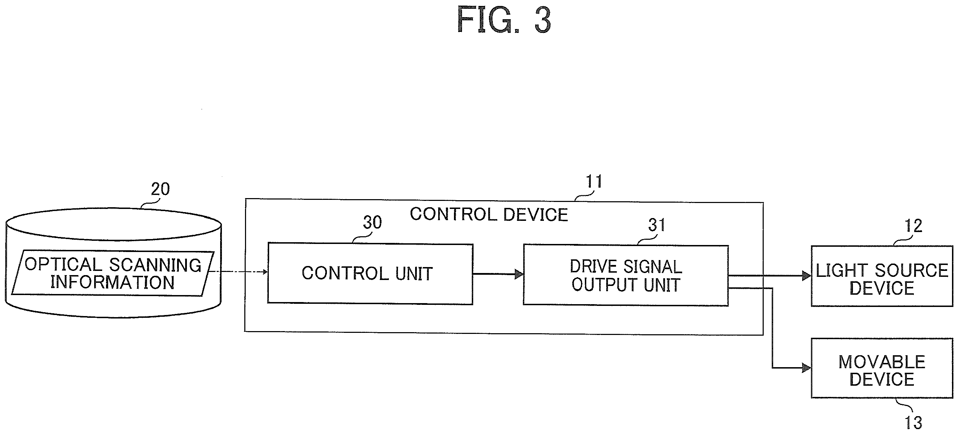

Next, the functional structure of the control device 11 of the optical scanning system 10 will be described with reference to FIG. 3. FIG. 3 is a functional block diagram illustrating an example of the control device of the optical scanning system.

As illustrated in FIG. 3, the control device 11 includes a control unit 30 and a drive signal output unit 31 as functional units.

The control unit 30 is implemented by, for example, the CPU 20, the FPGA 23 and the like. The control unit 30 acquires the optical scanning information from the external device 20, converts the optical scanning information into a control signal, and outputs the control signal to the drive signal output unit 31. For example, the control unit 30 acquires the image data from the external device 20 or the like as the optical scanning information, generates a control signal from the image data by a predetermined process, and outputs the control signal to the drive signal output unit 31.

The drive signal output unit 31 is implemented by the light source device driver 25, the movable device driver 26, and the like, and outputs a drive signal to the light source device 12 or the movable device 13 based on the input control signal.

The drive signal is a signal for controlling driving of the light source device 12 or the movable device 13. For example, in the light source device 12, the drive signal is a drive voltage for controlling the irradiation timing and irradiation intensity of the light source. Further, for example, in the movable device 13, the drive signal is a drive voltage for controlling the timing and movable range for allowing the reflecting surface 14 of the movable device 13 to be movable.

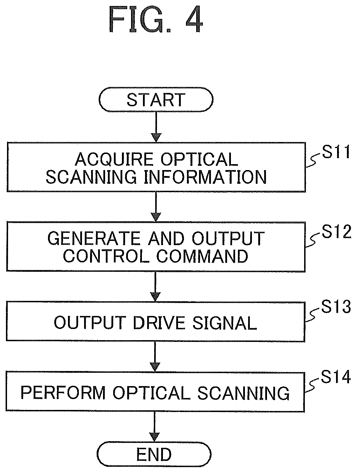

Next, a process in which the optical scanning system 10 performs optical scanning on the scanned surface 15 will be described with reference to FIG. 4. FIG. 4 is a flowchart illustrating an example of a process related to the optical scanning system.

In step S11, the control unit 30 acquires the optical scanning information from the external device 20 or the like.

In step S12, the control unit 30 generates a control signal from the acquired optical scanning information, and outputs the control signal to the drive signal output unit 31.

In step S13, the drive signal output unit 31 outputs a drive signal to the light source device 12 and the movable device 13 based on the input control signal.

In step 14, the light source device 12 emits light based on the input drive signal. Further, the movable device 13 allows the reflecting surface 14 to be movable based on the input drive signal. The light is deflected in any direction by driving of the light source device 12 and the movable device 13, to perform optical scanning.

Note that the optical scanning system 10 described above includes a device and a function in which a single control device 11 controls the light source device 12 and the movable device 13, but instead may include a control device for a light source device and a control device for a movable device, separately.

In the optical scanning system 10, a single control device 11 is provided with the function of the light source device 12, the function of the control unit 30 of the movable device 13, and the function of the drive signal output unit 31. However, these functions may be provided separately. For example, a drive signal output device including the drive signal output unit 31 may be provided with the control device 11 including the control unit 30. Note that in the optical scanning system 10 described above, the movable device 13 including the reflecting surface 14 and the control device 11 may constitute the light deflection system that performs light deflection.

### [Image Projection Device]

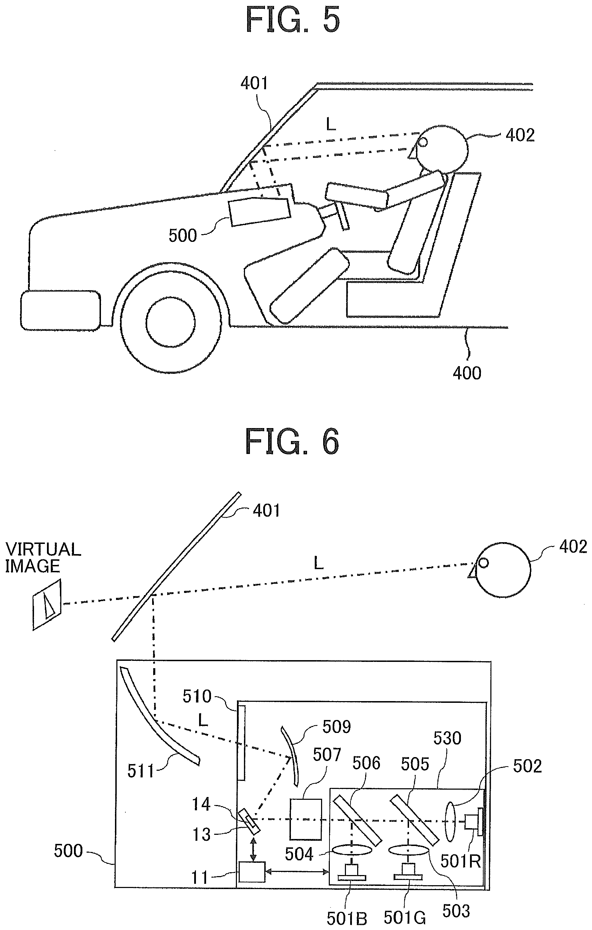

Next, an image projection device to which the control device according to this embodiment is applied will be described in detail with reference o FIGS. 5 and 6.

FIG. 5 is a schematic view according to an embodiment of a vehicle 400 in which a head-up display device 500, which is an example of an image projection device, is mounted. FIG. 6 is a schematic view illustrating an example of the head-up display device 500.

The image projection device is a device that projects an image by optical scanning, and is, for example, a head-up display device.

As illustrated in FIG. 5, the head-up display device 500 is installed, for example, in the vicinity of the windshield (windshield 401 or the like) of the vehicle 400. Projected light L emitted from the head-up display device 500 is reflected by the windshield 401, and is directed toward an observer (driver 402), that is, a user. Thus, the driver 402 can visually recognize, as a virtual image, the image or the like projected by the head-up display device 500. Note that a combiner may be installed in the inner wall surface of the windshield to enable the user to visually recognize the virtual image by projected light reflected by the combiner.

As illustrated in FIG. 6, the head-up display device 500 outputs laser light from red, green, and blue laser light sources 501R, 501G, and 501B. The output laser light passes through an incident optical system formed of collimator lenses 502, 503, and 504, which are provided for the respective laser light sources, two dichroic mirrors 505 and 506, and a light amount adjustment unit 507, and is then deflected by the movable device 13 including the reflecting surface 14. The deflected laser light passes through a projection optical system formed of a free-form surface mirror 509, an intermediate screen 510, and a projection mirror 511, and is projected on a screen. Note that in the head-up display device 500 described above, the laser light sources 501R, 501G, and 501B, the collimator lenses 502, 503, and 504, and the dichroic mirrors 505 and 506 are formed into a single unit, that is, a light source unit 530 by an optical housing.

The head-up display device 500 described above projects an intermediate image displayed on the intermediate screen 510 onto the windshield 401 of the vehicle 400, to allow the driver 402 to visually recognize the intermediate image as a virtual image.

Respective color laser beams emitted from the laser light sources 501R, 501G, and 501B are converted into substantially parallel light by the collimator lenses 502, 503, and 504, respectively, and are combined by two dichroic mirrors 505 and 506. The amount of combined laser light is adjusted by the light amount adjustment unit 507, and is then two-dimensionally scanned by the movable device 13 including the reflecting surface 14. The projected light L that is two-dimensionally scanned by the movable device 13 is reflected by the free-form surface mirror 509, and a distortion of the light is corrected. After that, the light is collected on the intermediate screen 510 to display an intermediate image. The intermediate screen 510 is formed of a microlens array in which microlenses are two-dimensionally arranged, and enlarges the projected light L incident on the intermediate screen 510 for each microlens.

The movable device 13 allows the reflecting surface 14 to be reciprocatingly movable in two axis directions to two-dimensionally scan the projected light L incident on the reflecting surface 14. The drive control of the movable device 13 is performed in synchronization with the light emitting timing of each of the laser light sources 501R, 501G, and 501B.

The head-up display device 500 has been described above as an example of the image projection device. However, the image projection device may have a structure in which the movable device 13 including the reflecting surface 14 performs optical scanning to project an image. For example, the present invention can also be applied to, for example, a projector that is placed on a desk or the like and projects an image on a display screen, and a head mount display device that is mounted on a wearable member which is worn on the head or the like of the observer, projects an image on a reflection-transmission screen included in the wearable member, or projects an image on the eyes of the observer as a screen.

Further, the image projection device may be mounted not only on a vehicle or a wearable member, but also on a movable body, such as an aircraft, a ship, or a mobile robot, or a non-movable body, such as a working robot that manipulates a driving target such as a manipulator, without moving from one spot.

### [Light Writing Device]

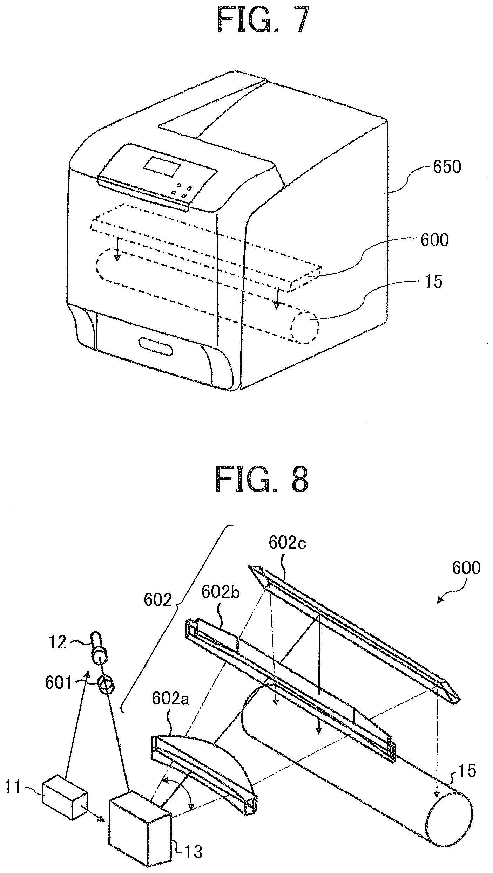

Next, a light writing device serving as an optical scanning device to which the control device 11 of this embodiment is applied will be described in detail with reference to FIGS. 7 and 8.

FIG. 7 illustrates an example of an image forming device incorporating a light writing device 600. FIG. 8 is a schematic view illustrating an example of the light writing device 600.

As illustrated in FIG. 7, the light writing device 600 is used as a structural member of the image forming device typified by a laser printer 650 or the like including a printer function using laser light. In the image forming device, the light writing device 600 performs optical scanning on a photosensitive drum serving as the scanned surface 15 with one or more laser beams, to write light on the photosensitive drum.

As illustrated in FIG. 8, in the light writing device 600, laser light from the light source device 12 such as a laser element passes through an imaging optical system 601 such as a collimator lens, and is then deflected in one axis direction or two axis directions by the movable device 13 including the reflecting surface 14. After that, the laser light deflected by the movable device 13 passes through a scanning optical system 602, which is formed of a first lens 602a, a second lens 602b, and a reflective mirror unit 602c, and is emitted on the scanned surface 15 (for example, a photosensitive drum or photosensitive paper) to write light thereon. The scanning optical system 602 focuses light beams on the scanned surface 15 in a spot manner. The light source device 12 and the movable device 13 including the reflecting surface 14 are driven based on the control of the control device 11.

Thus, the light writing device 600 described above can be used as a structural member of the image forming device including a printer function using laser light. Further, the scanning optical system is varied to enable optical scanning not only in one axis direction, but also in two axis directions, and laser light is deflected on a thermal medium to be heated, so that the scanning optical system can be used as a structural member of the image forming device such as a laser label device for printing.

The movable device 13 including the reflecting surface 14 that is applied to the light writing device described above has low power consumption for driving as compared with the rotary polygon mirror using a polygon mirror or the like, which is advantageous in power saving of the light writing device. Further, wind noise during vibration of the movable device 13 is smaller than wind noise of the rotary polygon mirror, which is advantageous in improving the silence of the light writing device. In the light writing device, a predominantly small installation space is required as compared with the rotary polygon mirror, and the calorific value of the movable device 13 is small. This facilitates downsizing of the light writing device, which is advantageous in miniaturization of the image forming device.

### [Object Recognition Device]

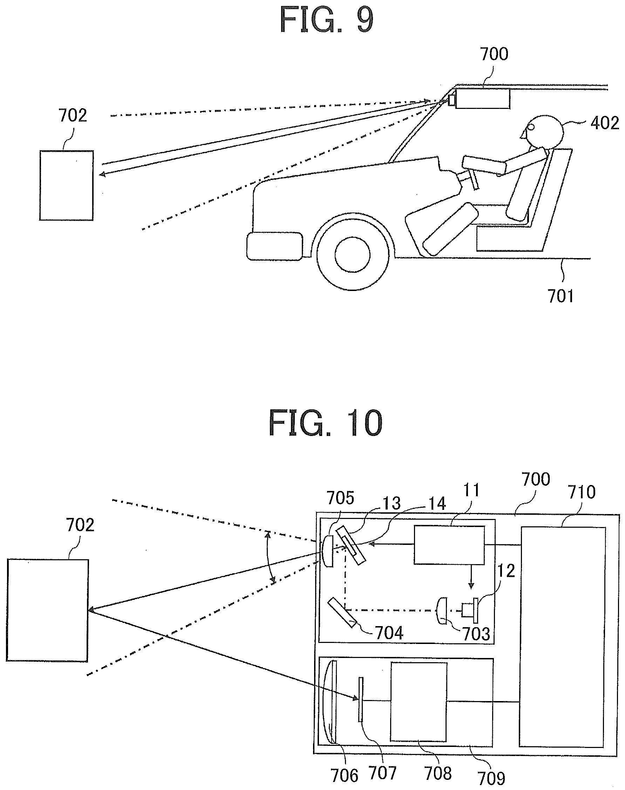

Next, an object recognition device to which the control device of this embodiment described above is applied will be described in detail with reference to FIGS. 9 and 10.

FIG. 9 is a schematic view illustrating a vehicle on which a laser radar device that is an example of an object recognition device is mounted. FIG. 10 is a schematic view illustrating an example of the laser radar device. The laser radar device is also called a Light Detection and Ranging (LIDAR) device.

The object recognition device is a device that recognizes an object in a target direction, and is, for example, a laser radar device.

As illustrated in FIG. 9, the laser radar device 700 is mounted on, for example, the vehicle 701, performs optical scanning in a target direction and receives light reflected from a subject 702 present in the target direction, to recognize the subject 702.

As illustrated in FIG. 10, laser light output from the light source device 12 passes through an incident optical system that is formed of a collimator lens 703, which is an optical system that converts diverging light into substantially parallel light, and a flat mirror 704, and is scanned in one axis direction or two axis directions by the movable device 13 including the reflecting surface 14. Further, the laser light passes through a projection lens 705 or the like, which is a projection optical system, and is emitted on the subject 702 located in front of the device. Driving of the light source device 12 and the movable device 13 is controlled by the control device 11. The light reflected by the subject 702 is detected by a light detector 709. Specifically, the reflected light passes through a condenser lens 706 or the like, which is an incident light detecting/receiving optical system, and is received by an imaging element 707. The imaging element 707 outputs the detected signal to a signal processing device 708. The signal processing circuit 708 performs a predetermined process, such as binarization and noise processing, on the received detected signal, and outputs the result to a distance measuring circuit 710.

The distance measuring circuit 710 detects the presence or absence of the subject 702 on the basis of a time difference between a timing when the light source device 12 emits laser light and a timing when the light detector 709 receives laser light, or based on a phase difference between pixels of the imaging element 707 which has received light, and further calculates information about a distance from the subject 702.

The movable device 13 including the reflecting surface 14 is less likely to be damaged, as compared with a polygon mirror, and is compact. This contributes to providing a compact radar device with high durability. Such a laser radar device can be mounted on, for example, a vehicle, an aircraft, a ship, and a robot, and is capable of performing optical scanning within a predetermined range to recognize the presence or absence of an obstacle and recognize a distance from the obstacle.

As the object recognition device described above, the laser radar device 700 has been described by way of example. However, the object recognition device is not limited to the embodiments described above, as long as the control device 11 controls the movable device 13 including the reflecting surface 14 to perform optical scanning and the light detector receives reflected light to recognize the subject 702.

The present invention can also be applied to, for example, a security sensor that recognizes an intruding object by biometric authentication for calculating object information, such as a shape, from distance information obtained by performing optical scanning of a hand or a face and referring to the information with recorded data, or by optical scanning within a target range, and a structural member of a three-dimensional scanner that calculates and recognizes object information, such as a shape, from distance information obtained by optical scanning and outputs the information as three-dimensional data.

### [Packaging]

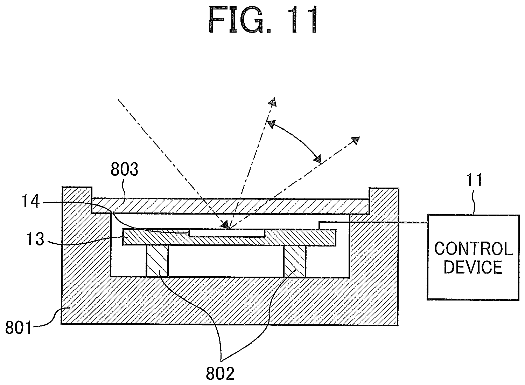

Next, packaging of the movable device controlled by the control device according to this embodiment will be described with reference to FIG. 11.

FIG. 11 is a schematic view illustrating an example of a packaged movable device.

As illustrated in FIG. 11, the movable device 13 is attached to an attachment member 802, which is disposed at the inside of the package member 801, and a part of the package member is covered with a transmissive member 803 and is sealed to be packaged. Further, an insert gas, such as nitrogen, is sealed in the package. As a result, degradation due to oxidation of the movable device 13 is suppressed and durability to a variation in the environment, such as a temperature, is improved. As illustrated in FIG. 11, the movable device is connected to the control device 11.

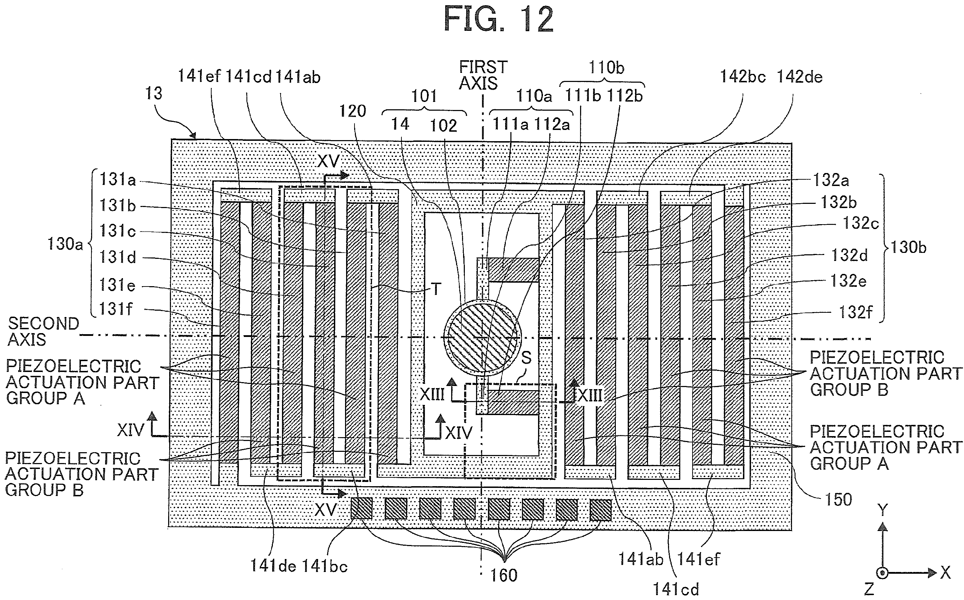

Details of the movable device used for the light deflection system, the optical scanning system, the image projection device, the light writing device, and the object recognition device described above and details of this embodiment will be described with reference to FIGS. 12 to 23.

### [Movable Device]

First, the movable device will be described with reference to FIGS. 12 to 14.

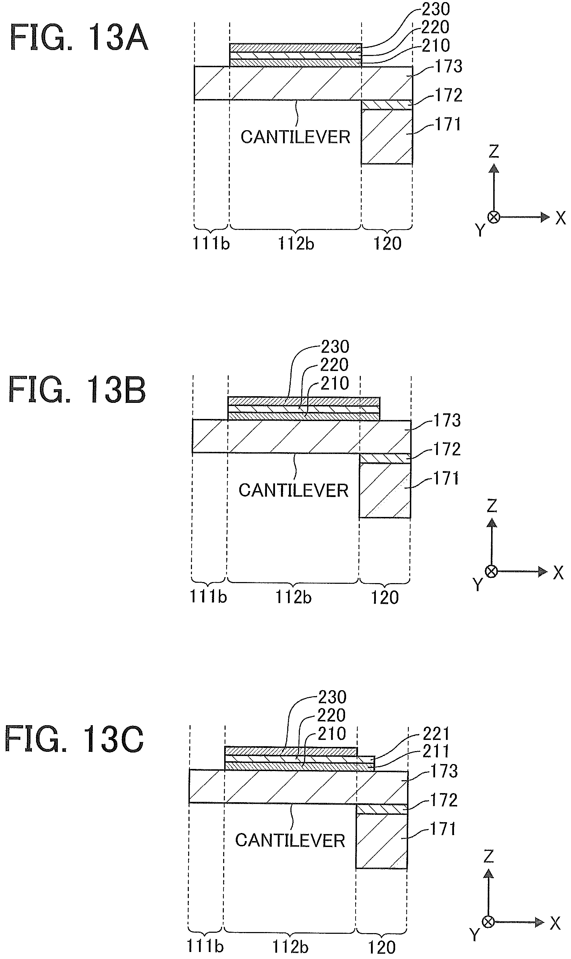

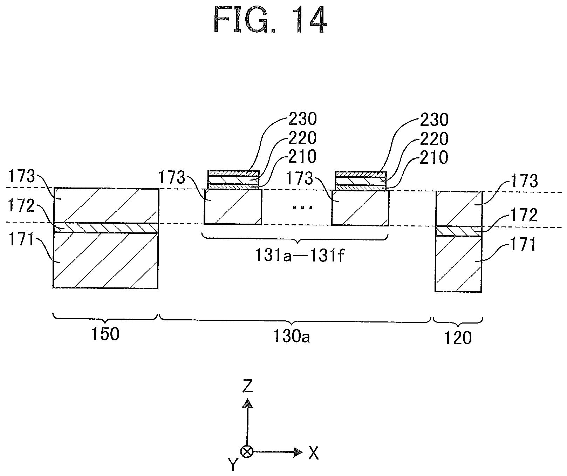

FIG. 12 is a plan view of a cantilever type movable device capable of deflecting light in two axis directions. FIG. 13C is a cross-sectional view taken along a line P-P' in FIG. 12. FIG. 14 is a cross-sectional view taken along a line Q-Q' in FIG. 12.

As illustrated in FIG. 12, the movable device 13 includes: a mirror part 101 that reflects incident light; first drive parts 110a and 110b that are coupled to the mirror part and drive the mirror part 101 about a first axis parallel to the Y-axis; a first support part 120 that supports the mirror part 101 and the first drive parts 110a and 110b; second drive parts 130a and 130b that are coupled to the first support part 120 and drive the mirror part 101, the first drive parts 110a and 110b, and the first support part 120 about the second axis parallel to the X-axis; a second support part 150 that supports the second drive parts 130a and 130b; and an electrode coupling part 160 that is electrically coupled to each of the first drive parts 110a and 110b, the second drive parts 130a and 130b, and the control device 11.

The movable device 13 has a structure in which, for example, the reflecting surface 14, first piezoelectric actuation parts 112a and 112b, second piezoelectric actuation parts 131a to 131f and 132a to 132f, the electrode coupling part 160, and the like are formed on a substrate on which a single Silicon On Insulator (SOI) substrate is formed by an etching process or the like, to integrally form the components. Note that the formation of the above-mentioned components may be performed after the formation of the SOI substrate, or during the formation of the SOI substrate.

The SOI substrate is a substrate having a structure in which a silicon oxide layer 172 is formed on a first silicon layer, which is formed of single-crystal silicon (Si), and a second layer, which is formed of single-crystal silicon, is further formed on the silicon oxide layer 172.

Hereinafter, the first silicon layer is referred to as a silicon support layer 171 and the second silicon layer is referred to as a silicon active layer 173. Note that the silicon active layer 173 may be used after being sintered. In this case, a thin silicon oxide layer is formed on the surface of the silicon active layer 173, which prevents short-circuiting with the electrode.

Since the silicon active layer 173 has a smaller thickness in a Z-axis direction than in the X-axis direction or the Y-axis direction, a member formed only of the silicon active layer 173 has a function as an elastic part having elasticity.

Note that the SOI substrate need not necessarily have a flat surface shape, and may have a curvature or the like. Further, the member used for forming the movable device 13 is not limited to the SOI substrate, as long as the member can be integrally formed by an etching process or the like and a part of the member has elasticity.

The mirror part 101 is formed of, for example, a mirror part base 102 having a circular shape, and the reflecting surface 14 formed on a +Z-side surface of the mirror part base. The mirror part base 102 is formed of, for example, the silicon active layer 173. The reflecting surface 14 is formed of, for example, a metallic thin film containing aluminum, gold, silver, or the like.

The first drive parts 110a and 110b respectively include two torsion bars 111a and 111b each having one end coupled to the mirror part base 102 and extending in a first axis direction to support the mirror part 101 in a movable manner, and first piezoelectric actuation parts 112a and 112b each having one end coupled to the torsion bar and another end coupled to an inner peripheral part of the first support part 120.

As illustrated in FIG. 13C, the torsion bars 111a and 111b are each formed of the silicon active layer 173. The first piezoelectric actuation parts 112a and 112b have a structure in which a lower electrode 210, a piezoelectric part 220, and an upper electrode 230 are formed in this order on the +Z-side surface of the silicon active layer 173 which is an elastic part functioning as a cantilever. The upper electrode 230 and the lower electrode 210 are each formed of, for example, gold (Au), platinum (Pt), IrO2 (iridium dioxide), or SR0 (SrRuO3: strontium ruthenium oxide). The piezoelectric part 220 is formed of, for example, PZT (lead zirconate titanate) which is a piezoelectric material.

Referring back to FIG. 12, the first support part 120 is a support body which is formed of, for example, the silicon support layer 171, the silicon oxide layer 172, and the silicon active layer 173, and has a rectangular shape formed so as to surround the mirror part 101.

The second drive parts 130a and 130b are formed of, for example, a plurality of second piezoelectric actuation parts 131a to 131f and 132a to 132f which are coupled in a turned-back manner. One end of each of the second drive parts 130a and 130b is coupled to an outer peripheral part of the first support part 120, and another end of each of the second drive parts 130a and 130b is coupled to an inner peripheral part of the second support part 150. At this time, a coupling section between the second drive part 130a and the first support part 120 and a coupling section between second drive part 130b and the first support part 120 are point-symmetric with respect to the center of the reflecting surface 14, and a coupling section between the second drive part 130a and the second support part 150 and a coupling section between the second drive part 130b and the second support part 150 are also point-symmetric with respect to the center of the reflecting surface 14.

As illustrated in FIG. 14, second drive parts 130a and 130b each have a structure in which the lower electrode 210, the piezoelectric part 220, and the upper electrode 230 are formed in this order on the +Z-side surface of the silicon active layer 173 which is an elastic part functioning as a cantilever. The upper electrode 230 and the lower electrode 210 are formed of, for example, gold (Au) or platinum (Pt). The piezoelectric part 220 is formed of, for example, PZT (lead zirconate titanate) which is a piezoelectric material.

Referring back to FIG. 12, the second support part 150 is a rectangular support body which is formed of, for example, the silicon support layer 171, the silicon oxide layer 172, and the silicon active layer 173, so as to surround the mirror part 101, the first drive parts 110a and 110b, the first support part 120, and the second drive parts 130a and 130b.

The electrode coupling part 160 is formed on, for example, the +Z-side surface of the second support part 150, and is electrically coupled to the upper electrodes 230 and lower electrodes 210 of the first piezoelectric actuation parts 112a and 112b and the second piezoelectric actuation parts 131a to 131f and 132a to 132f and the control device 11 via an electrode wire such as aluminum (Al). Note that the upper electrodes 230 or the lower electrodes 210 may be directly coupled to the electrode coupling parts, respectively, or may be indirectly coupled by coupling the electrodes.

While the above embodiment illustrates an example in which the piezoelectric part 220 is formed only on one surface (+Z-side surface) of the silicon active layer 173 serving as the elastic part, the piezoelectric part 220 may be provided on another surface (for example, a -Z-side surface) of the elastic part, or may be provided on both surfaces of the elastic part.

Further, the shape of each component is not limited to the shape described in the embodiments, as long as the mirror part can be driven about the first axis or the second axis. For example, the torsion bars 111a and 111b or the first piezoelectric actuation parts 112a and 112b may have a shape with a curvature.

Furthermore, an insulating layer formed of a silicon oxide film may be formed on at least one of the +Z-side surface of the upper electrode 230 of each of the first drive parts 110a and 110b, the +Z-side surface of the first support part, the +Z-side surface of the upper electrode 230 of each of the second drive parts 130a and 130b, and the +Z-side surface of the second support part. At this time, an electrode wire is formed on the insulating layer, and an opening is formed by partially removing the insulating layer only at a coupling spot where the upper electrode 230 or the lower electrode 210 and the electrode wire are coupled, or by not forming the insulating layer at the coupling spot. With this structure, the degree of freedom of design of the first drive parts 110a and 110b, the second drive parts 130a and 130b, and the electrode wire can be increased and short-circuiting due to a contact between the electrodes can be suppressed. The silicon oxide film also functions as an antireflective material.

### [Details of Control Operation of Control Device]

Next, details of the control of the control device for driving the first drive part and the second drive part of the movable device will be described.

In the piezoelectric part 220 included in the first drive parts 110a and 110b and the second drive parts 130a and 130b, when a positive or negative voltage is applied in a polarization direction, a deformation (for example, expansion and contraction) which is proportional to the potential of the applied voltage occurs, so that a so-called inverse piezoelectric effect is exhibited. The first drive parts 110a and 110b and the second drive parts 130a and 130b utilize the above-mentioned inverse piezoelectric effect to allow the mirror part 101 to be movable.

At this time, an angle (deflection angle) at which an incident light beam is deflected on the reflecting surface 14 of the mirror part 101 is called a deflection angle. This deflection angle is zero when no voltage is applied to the piezoelectric part. When the deflection angle is larger than the angle of the piezoelectric part, the deflection angle is positive, and when the deflection angle is smaller than the angle of the piezoelectric part, the deflection angle is negative.

First, a control operation of the control device for driving the first drive part will be described.

In the first drive parts 110a and 110b, when drive voltages are applied in parallel to the piezoelectric parts 220 of the first piezoelectric actuation parts 112a and 112b via the upper electrode 230 and the lower electrode 210, respectively, the piezoelectric parts 220 are deformed. By the action of the deformation of each of the piezoelectric parts 220, the first piezoelectric actuation parts 112a and 112b are deformed to bend. As a result, the drive force about the first axis acts on the mirror part 101 through the distortion of the two torsion bars 111a and 111b, to allow the mirror part 101 to be movable about the first axis. The drive voltage applied to the first drive parts 110a and 110b is controlled by the control device 11.

Accordingly, the control device 11 applies drive voltages each having a predetermined sine waveform to the first piezoelectric actuation parts 112a and 112b of the first drive parts 110a and 110b, respectively, in parallel, to allow the mirror part 101 to be movable on the cycle of the drive voltage having the predetermined sine waveform about the first axis.

In particular, for example, when the frequency of the sine waveform voltage is set to about 20 kHz, which is about the same as the resonant frequency of each of the torsion bars 111a and 111b, the mirror part 101 is allowed to cause a resonant vibration at about 20 kHz by utilizing the generation of mechanical resonance due to distortion of the torsion bars 111a and 111b.

### [Details of Movable Device]

FIG. 13A is a cross-sectional view of Comparative Example 1 corresponding to FIG. 13C which is a cross-sectional view taken along a line P-P' in FIG. 12 of this embodiment. FIG. 13B is a cross-sectional view of Comparative Example 2 corresponding to FIG. 13C of this embodiment. For convenience of explanation, in Comparative Examples 1 and 2, members having the same structure and function as those of the movable device 13 of this embodiment are denoted by the same reference numerals as those of the movable device 13.

In Comparative Example 1 illustrated in FIG 13A, the lower electrode 210 and the piezoelectric part 220 are formed on the silicon active layer 173 between the first support part 120 and the torsion bar 111b in the first piezoelectric actuation part 112b. Similarly, in Comparative Example 1, the lower electrode 210 and the piezoelectric part 220 are formed on the silicon active layer 173 between the first support part 120 and the torsion bar 111b also in the first piezoelectric actuation part 112a.

In Comparative Example 2 illustrated in FIG. 13B, the lower electrode 210, the piezoelectric part 220, and the upper electrode 230 are formed on the silicon active layer 173 of the first support part 120 and on the silicon active layer 173 between the first support part 120 and the torsion bar 111b in the first piezoelectric actuation part 112b. In other words, in Comparative Example 2, the lower electrode 210, the piezoelectric part 220, and the upper electrode 230 of the first piezoelectric actuation part 112b project above the first support part 120. Similarly, in Comparative Example 2, the lower electrode 210, the piezoelectric part 220, and the upper electrode 230 of the first piezoelectric actuation part 112a project above the first support part 120.

In this embodiment illustrated in FIG. 13C, the lower electrode 210 and the piezoelectric part 220 in the first piezoelectric actuation part 112b are formed on the silicon active layer 173 of the first support part 120 and on the silicon active layer 173 between the first support part 120 and the torsion bar 111b. In other words, in this embodiment, the lower electrode 210 and the piezoelectric part 220 of the first piezoelectric actuation part 112b project above the first support part 120. Referring to FIG. 13C, a part of the lower electrode 210 on the first support part 120 (this part is hereinafter also referred to as a "lower electrode projecting part 1") is denoted by reference numeral 211, and a part of the piezoelectric part 220 on the first support part 120 (this part is hereinafter also referred to as a "piezoelectric part projecting part 1") is denoted by reference numeral 221. Similarly, in this embodiment, the lower electrode 210 and the piezoelectric part 220 of the first piezoelectric actuation part 112b project above the first support part 120.

In this case, it is necessary for Comparative Examples 1 and 2 and this embodiment to form a contact hole or a notch part for coupling another end of a wire having one end coupled to the electrode coupling part 160 to the lower electrode 210 on the first piezoelectric actuation part.

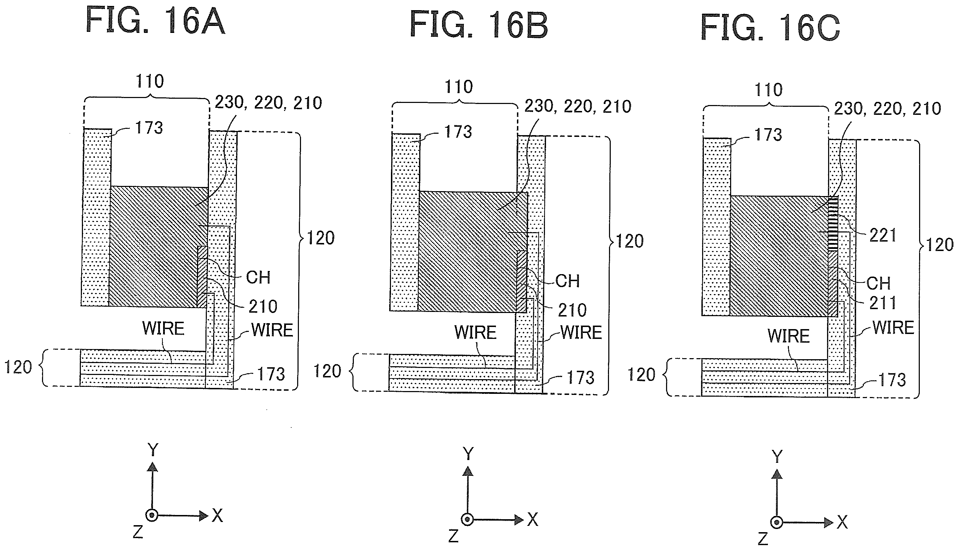

FIGS. 16A to 16C are top views illustrating an S-region (a region surrounded by a broken line indicated by a reference sign S) in Comparative Examples 1 and 2 and FIG. 12 of this embodiment, respectively. For convenience of explanation, in Comparative Examples 1 and 2, members having the same structure and function as those of the movable device 13 of this embodiment are denoted by the same reference numerals as those of the movable device 13.

In Comparative Example 1, a part of each of the upper electrode 230 and the piezoelectric part 220 on the silicon active layer 173 between the first support part 120 and the torsion bar is removed by, for example, etching, to form the contact hole or notch part (see FIG. 16A). However, in this case, there is a concern that the drive force of the first piezoelectric actuation part may be lowered.

In Comparative Example 2, a part of each of the upper electrode 230 and the piezoelectric part 220 on the silicon active layer 173 of the first support part 120 is removed by, for example, etching, to enable formation of the contact hole or notch part (see FIG. 16B). However, in this case, a drive source composed of the upper electrode 230, the piezoelectric part 220, and the lower electrode 210 is located on the first support part 120. Accordingly, there is a concern that, when a voltage is applied to a node between the upper electrode 230 and the lower electrode 210, the drive force of the piezoelectric part 220 acts on the first support part 120, which may cause an unwanted excitation vibration.

In this embodiment, a part of the piezoelectric part 220 (piezoelectric part projecting part 1) on the silicon active layer 173 of the first support part 120 is removed by, for example, etching, to enable formation of the contact hole or notch part on the lower electrode projecting part 1 (see FIG. 16C). In this case, the lowering of the drive force in Comparative Example 1 or the generation of an unwanted excitation vibration as Comparative Example 2 can be suppressed. Note that FIG. 16C illustrates that the lower electrode projecting part 1 and the piezoelectric part projecting part 1 have a rectangular shape. However, the lower electrode projecting part 1 and the piezoelectric part projecting part 1 may have a shape other than the rectangular shape, such as a polygonal shape.

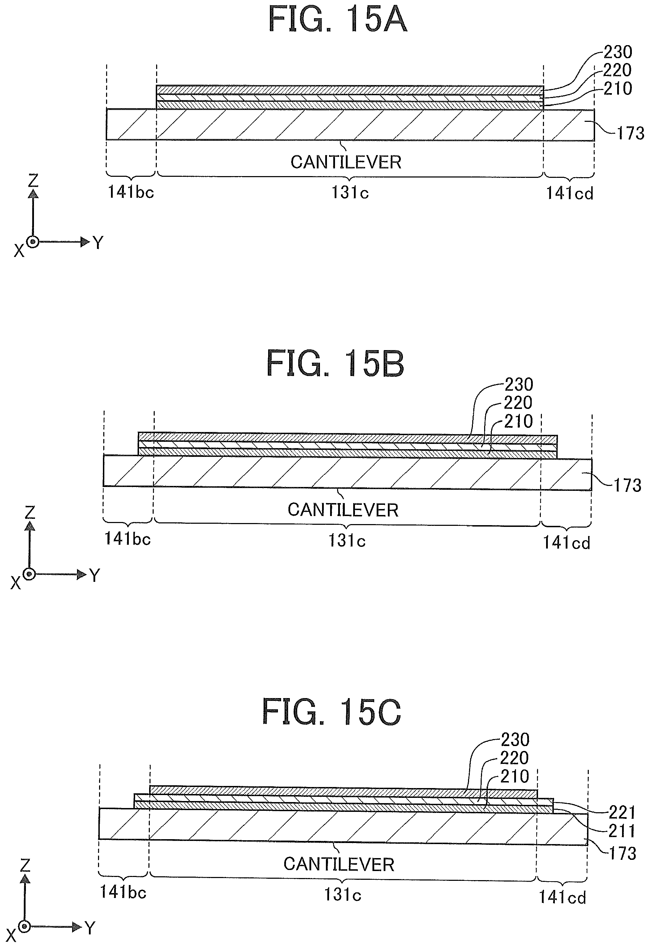

FIG. 15C is a cross-sectional view taken along a line R-R' in FIG. 12 according to this embodiment. FIG. 15A is a cross-sectional view corresponding to FIG. 15C of Comparative Example 1. FIG. 15B is a cross-sectional view corresponding to FIG. 15C of Comparative Example 2. For convenience of explanation, in Comparative Examples 1 and 2, members having the same structure and function as those of the movable device 13 of this embodiment are denoted by the same reference numerals as those of the movable device 13.

As illustrated in FIGS. 15A to 15C, each second piezoelectric actuation part has a structure in which the lower electrode 210, the piezoelectric part 220, and the upper electrode 230 are formed in this order on the +Z-side surface of the silicon active layer 173 which is an elastic part functioning as a cantilever. Coupling parts 141ab to 141ef and 142ab to 142ef which couple the second piezoelectric actuation parts 131a to 131f and 132a to 132f in a turned-back manner are formed of, for example, the silicon active layer 173. Note that the coupling parts 141ab to 141ef and 142ab to 142ef may be formed of the silicon support layer or the silicon oxide layer.

In Comparative Example 1 illustrated in FIG. 15A, the lower electrode 210 and the piezoelectric part 220 are formed on the silicon active layer 173 between the corresponding two coupling parts 141bc and 141cd in the second piezoelectric actuation part 131c. Similarly, in Comparative Example 1, the lower electrode 210 and the piezoelectric part 220 are formed on the silicon active layer 173 between the corresponding two coupling parts also in the other second piezoelectric actuation part.

In Comparative Example 2 illustrated in FIG. 15B, in the second piezoelectric actuation part 131c, the lower electrode 210, the piezoelectric part 220, and the upper electrode 230 are formed on the silicon active layer 173 between the corresponding two coupling parts 141bc and 141cd, on the silicon active layer 173 of the coupling part 141bc, and on the silicon active layer 173 of the coupling part 141cd. In other words, in Comparative Example 2, the lower electrode 210, the piezoelectric part 220, and the upper electrode 230 of the second piezoelectric actuation part 131c project above the corresponding two coupling parts 141bc and 141cd. Similarly, in Comparative Example 2, the lower electrode 210, the piezoelectric part 220, and the upper electrode 230 of the other second piezoelectric actuation part project above the corresponding two coupling parts.

In this embodiment illustrated in FIG. 15C, the lower electrode 210 and the piezoelectric part 220 are formed on the silicon active layer 173 between the corresponding two coupling parts 141bc and 141cd, on the silicon active layer 173 of the coupling part 141bc, and on the silicon active layer 173 of the coupling part 141cd in the second piezoelectric actuation part 131c. In other words, in this embodiment, the lower electrode 210 and the piezoelectric part 220 of the second piezoelectric actuation part 131c project above the corresponding two coupling parts 141bc and 141cd. Referring to FIG. 15C, a part of the lower electrode 210 on the coupling part (this part is hereinafter also referred to as a "lower electrode projecting part 2") is denoted by reference numeral 211, and a part of the piezoelectric part 220 on the coupling part (this part is hereinafter also referred to as a "piezoelectric part projecting part 2") is denoted by reference numeral 221. Similarly, in Comparative Example 3, the lower electrode 210 and the piezoelectric part 220 of the other second piezoelectric actuation part project above the corresponding two coupling parts.

In this case, it is necessary for Comparative Examples 1 and 2 and this embodiment to form a contact hole or a notch part for coupling another end of a wire having one end coupled to the electrode coupling part 160 to the lower electrode 210 on the second piezoelectric actuation part.

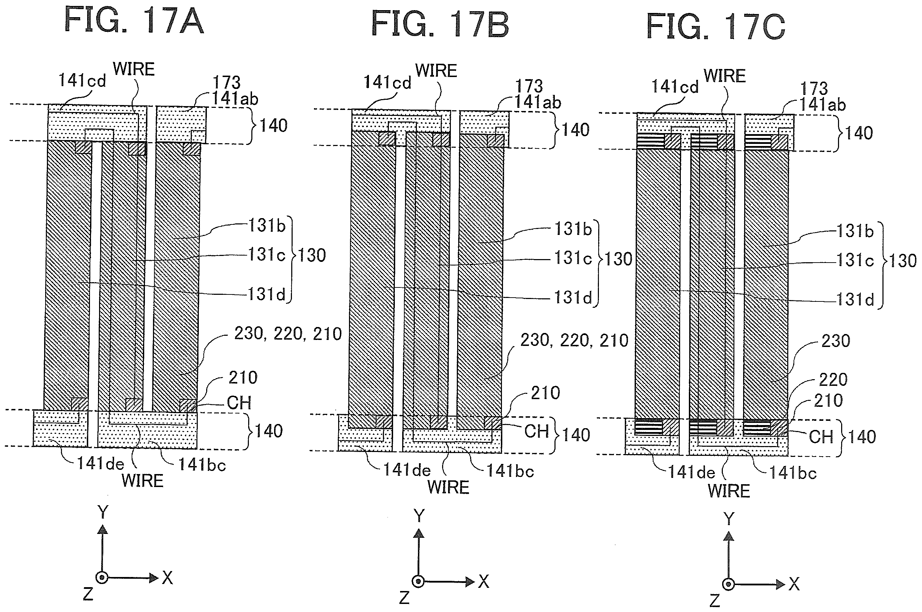

FIGS. 17A to 17C are top views illustrating a T-region (a region surrounded by a broken line indicated by reference sign T) in FIG. 12 of Comparative Examples 1 and 2 and this embodiment, respectively. For convenience of explanation, in Comparative Examples 1 and 2, members having the same structure and function as those of the movable device 13 of this embodiment are denoted by the same reference numerals as those of the movable device 13.

In Comparative Example 1, a part of each of the upper electrode 230 and the piezoelectric part 220 on the silicon active layer 173 between two coupling parts is removed to form the contact hole or notch part (see FIG. 17A). However, in this case, there is a concern that the drive force of the second piezoelectric actuation part may be lowered.

In Comparative Example 2, a part of each of the upper electrode 230 and the piezoelectric part 220 on the silicon active layer 173 between two coupling parts is removed, to enable formation of the contact hole or notch part (see FIG. 17B). However, in this case, a drive source composed of the upper electrode 230, the piezoelectric part 220, and the lower electrode 210 is located on each coupling part. Accordingly, there is a concern that, when a voltage is applied to a node between the upper electrode 230 and the lower electrode 210, the drive force of the piezoelectric part 220 acts on the coupling part, which may cause an unwanted excitation vibration.

In this embodiment, a part of the piezoelectric part 220 (piezoelectric part projecting part 2) on the silicon active layer 173 of two coupling parts can be removed to form the above-mentioned contact hole or notch part on the lower electrode projecting part 2 (see FIG. 17C). In this case, the lowering of the drive force in Comparative Example 1 or the generation of an unwanted excitation vibration as Comparative Example 2 can be suppressed. Note that FIG. 17C illustrates that the lower electrode projecting part 2 and the piezoelectric part projecting part 2 have a rectangular shape. However, the lower electrode projecting part 2 and the piezoelectric part projecting part 2 may have a shape other than the rectangular shape, such as a polygonal shape. Note that in FIGS. 17A to 17C, the illustration of a wire coupled to the upper electrode 230 is omitted.

Note that an insulating layer formed of a silicon oxide film may be formed on at least one of the +Z-side surface of the upper electrode 230 of the first piezoelectric actuation part, the +Z-side surface of the first support part, the +Z-side surface of the upper electrode 230 of the second piezoelectric actuation part, the +Z-side surface of the coupling part, and the +Z-side surface of the third support part. At this time, an electrode wire is formed on the insulating layer, and an opening is formed by partially removing the insulating layer only at a coupling spot where the upper electrode 230 or the lower electrode 210 and the electrode wire are coupled, or by not forming the insulating layer at the coupling spot. With this structure, the degree of freedom of design of the first piezoelectric actuation part, the second piezoelectric actuation part, and the electrode wire can be increased and short-circuiting due to a contact between the electrodes can be suppressed. The silicon oxide film, which is an insulating layer, also functions as an antireflective material.

While this embodiment illustrates an example in which the piezoelectric part 220 is formed only on one surface (+Z-side surface) of the silicon active layer 173 serving as the elastic part, the piezoelectric part 220 may be provided on another surface (for example, the - Z-side surface) of the elastic part, or may be provided on both surfaces of the elastic part.

The shape of each component is not limited the shape described in the embodiments, as long as the mirror part can be driven about the first axis or the second axis. For example, the torsion bars 111a and 111b and the first piezoelectric actuation parts 112a and 112b may have a shape with a curvature.

### [Operation of Movable Device and Details of Operation and Effects]

Next, a method for driving the first piezoelectric actuation part and the second piezoelectric actuation part of the movable device 13, a rotation state, and operation and effects will be described.

In the piezoelectric parts 220 of the first drive parts 110a and 110b and the second drive parts 130a and 130b, when a positive or negative voltage is applied in a polarization direction, a deformation (for example, expansion and contraction) which is proportional to the potential of the applied voltage occurs, so that a so-called inverse piezoelectric effect is exhibited. The first drive parts 110a and 110b and the second drive parts 130a and 130b utilize the above-mentioned inverse piezoelectric effect to allow the silicon active layer 173, which is included in the Z-direction layer structure of the first piezoelectric actuation part and the second piezoelectric actuation part, to be deformed to expand or contract in conjunction with the piezoelectric part 220. This allows the mirror part 101 to be movable.

The first piezoelectric actuation part causes the reflective mirror to be reciprocatingly rotated about the Y-axis in FIG. 12. This operation is referred to as a rotation about the first axis. In the first drive parts 110a and 110b, when drive voltages are applied in parallel to the piezoelectric parts 220 of the first piezoelectric actuation parts 112a and 112b via the upper electrode 230 and the lower electrode 210, respectively, the piezoelectric parts 220 are deformed. By the action of the deformation of each of the piezoelectric parts 220, the first piezoelectric actuation parts 112a and 112b are deformed to bend. As a result, the drive force about the first axis acts on the mirror part 101 through the distorion of the two torsion bars 111a and 111b, to allow the mirror part 101 to be movable about the first axis. The drive voltage applied to the first drive parts 110a and 110b has a sine wave in many cases. At this time, the mirror part 101 is rotated on the cycle of the drive voltage having a sine waveform by a resonant operation.

In particular, for example, when the frequency of the sine waveform voltage is set to about 20 kHz, which is about the same as the resonant frequency of each of the torsion bars 111a and 111b, the mirror part 101 is allowed to cause a resonant vibration at about 20 kHz by utilizing the generation of mechanical resonance due to distortion of the torsion bars 111a and 111b.

When the first drive parts 110a and 110b are driven to rotate the mirror part 101, the first support part 120 functions as a fixed end of the first piezoelectric actuation part. The first support part 120 has a layer that is formed continually with the second piezoelectric actuation part. Therefore, it is not desirable that the drive source of the first piezoelectric actuation part is present on the first support part 120. This is because the silicon active layer 173 of the first support part 120 is continuous with the silicon active layer 173 of the second piezoelectric actuation part. In the case of a two-axis operation, the vibration of the first piezoelectric actuation part becomes vibration crosstalk with respect to the vibration of the second piezoelectric actuation part.

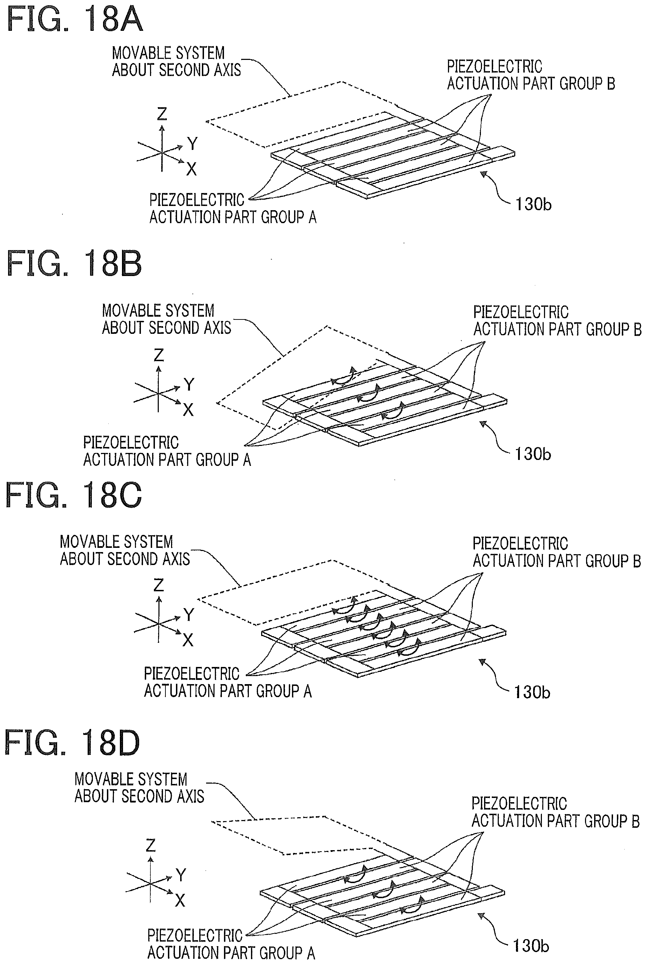

FIGS. 18 are schematic views each schematically illustrating driving of the second drive part 130b of the movable device 13. A broken line indicates a system that includes the mirror part 101, the first drive parts 110a and 110b, and the first support part 120 and is movable about the second axis (this system is hereinafter also referred to as a "second-axis movable system").

FIG 18A illustrates a state where no voltage is applied. FIG. 18B illustrates a state where a voltage is applied only to a piezoelectric drive part group A. FIG. 18C illustrates a state where a voltage is applied to both the piezoelectric drive part group A and a piezoelectric drive part group B. FIG. 18D illustrates a state where a voltage is applied only to the piezoelectric drive part group B.

As illustrated in FIG. 18A, in a state where no drive voltage is applied to the second drive part 130b, the deflection angle of the second drive part 130b is zero.

In the plurality of second piezoelectric actuation parts 131a to 131f included in the second drive part 130a illustrated in FIG. 12, even-numbered second piezoelectric actuation parts counted from the second piezoelectric actuation part (131a) that is closest to the mirror part 101, i.e., the second piezoelectric actuation parts 131b, 131d, and 131f, are defined as the piezoelectric drive part group A. In the plurality of second piezoelectric actuation parts 132a to 132f included in the second drive part 130b, odd-numbered second piezoelectric actuation parts counted from the second piezoelectric actuation part (132a) that is closest to the mirror part 101, i.e., the second piezoelectric actuation parts 132a, 132c, and 132e are also defined as the piezoelectric drive part group A. When drive voltages are applied in parallel to the piezoelectric drive part group A, as illustrated in FIG. 18B, the piezoelectric drive part group A is deformed to bend in the same direction and thus the mirror part 101 is movable about the second axis in the -direction.

In the plurality of second piezoelectric actuation parts 131a to 131f included in the second drive part 130a, odd-numbered second piezoelectric actuation parts counted from the second piezoelectric actuation part (131a) that is closest to the mirror part 101, i.e., the second piezoelectric actuation parts 131a, 131c, and 131e, are defined as the piezoelectric drive part group B. In the plurality of second piezoelectric actuation parts 132a to 132f included in the second drive part 130b, even-numbered second piezoelectric actuation parts counted from the second piezoelectric actuation part (132a) that is closest to the mirror part, i.e., the second piezoelectric actuation parts 132b, 132d, and 132f, are also defined as the piezoelectric drive part group B. When drive voltages are applied in parallel to the piezoelectric drive part group B, as illustrated in FIG. 18D, the piezoelectric drive part group B is deformed to bend in the same direction and thus the mirror part 101 is movable about the second axis in the +Z-direction.

As illustrated in FIGS. 18B and 18D, in the second drive part 130a or the second drive part 130b, the plurality of piezoelectric parts 220 included in the piezoelectric drive part group A, or the plurality of piezoelectric parts 220 included in the piezoelectric drive part group B, are simultaneously deformed to bend, to enable accumulation of movable amounts due to bending deformation and increasing the deflection angle about the X-axis of the mirror part 101. This operation is referred to as a rotation about the second axis. For example, as illustrated in FIG. 12, the second drive parts 130a and 130b are coupled so as to be point-symmetric to the first support part 120 with respect to the center of the first support part 120. Accordingly, when a drive voltage is applied to the piezoelectric drive part group A, a drive force for causing a movement in the +Z-direction is generated in the coupling part between the first support part 120 and the second drive part 130a in the second drive part 130a, and a drive force for causing a movement in the Z-direction is generated in the coupling part between the first support part 120 and the second drive part 130b in the second drive part 130b, so that the movable amounts can be accumulated and the deflection angle about the second axis of the mirror part 101 can be increased.

Further, as illustrated in FIG. 18C, when the movable amount of the mirror part 101 by the piezoelectric drive part group A due to the voltage application matches the movable amount of the mirror part 101 by the piezoelectric drive group B due to the voltage application, the deflection angle is zero.

A drive voltage is applied to the second piezoelectric actuation part so as to continuously repeat FIGS. 18B to 18D, to allow the mirror part 101 to be driven about the second axis. In this case, driving that is not limited by an operation at a resonant frequency inherent in the structure can be achieved.

Examples of the drive voltage to be applied to the second piezoelectric actuation part include a drive voltage to be applied to the piezoelectric drive part group A (hereinafter, drive voltage A) and a drive voltage to be applied to the piezoelectric drive part group B (hereinafter, drive voltage B).

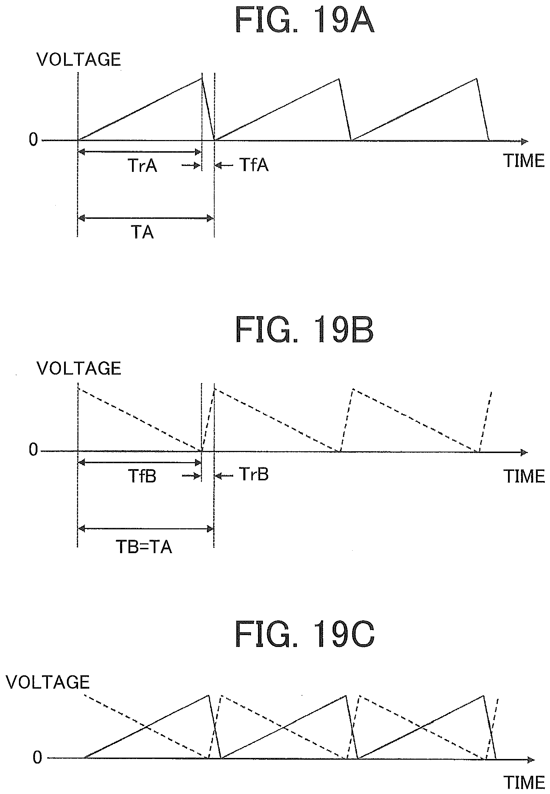

FIG. 19A illustrates an example of the waveform of the drive voltage A to be applied to the piezoelectric drive part group A of the movable device 13. FIG. 19B illustrates an example of the waveform of the drive voltage B to be applied to the piezoelectric drive part group B of the movable device 13. FIG. 19C is a diagram illustrating that the waveform of the drive voltage A and the waveform of the drive voltage B are superimposed.

As illustrated in FIG. 19A, the drive voltage A to be applied to the piezoelectric drive part group A is, for example, a drive voltage having a sawtooth-shaped waveform, and has a frequency of, for example, 60 HZ. In the waveform of the drive voltage A, when a duration of a rising period in which the voltage value increases from a minimum value to the next maximum value is represented by TrA and a duration of a falling period in which the voltage value decreases from the maximum value to the next minimum value is represented by TfA, for example, a ratio of TrA: TfA = 9 : 1 is set in advance. At this time, a ratio of TrA to one period is referred to as symmetry of the drive voltage A.

As illustrated in FIG. 19B, the drive voltage to be applied to the piezoelectric drive part group B is, for example, a drive voltage having a sawtooth-shaped waveform, and has a frequency of, for example, 60 HZ. In the waveform of the drive voltage B, when a duration of a rising period in which the voltage value increases from a minimum value to the next maximum value is represented by TrB and a duration of a falling period in which the voltage value decreases from the maximum value to the next minimum value is represented by TfB, for example, a ratio of TfB : TrB = 9 : 1 is set in advance. At this time, a ratio of TfB to one period is referred to as symmetry of the drive voltage B. Further, as illustrated in FIG. 19C, for example, a period TA of the waveform of the drive voltage A is set to be the same as a period TB of the waveform of the drive voltage B.

Note that the sawtooth-shaped waveforms of the drive voltage A and the drive voltage B are generated by superimposing sine waves. In this embodiment, a drive voltage having a sawtooth-shaped waveform is used as each of the drive voltages A and B, but the drive voltage is not limited to this. Drive voltages having a waveform that is changed depending on device characteristics of the movable device, such as a drive voltage having a sawtooth-shaped waveform with rounded peaks, and a drive voltage having a waveform obtained by changing a linear region of a sawtooh shape wave into a curve, may also be used.

As described above, the second drive parts cause a plurality of cantilevers to be simultaneously deformed to bend, to accumulate the movable amounts due to bending deformation. Further, the drive signal waveforms to be input to the piezoelectric drive part group A and the piezoelectric drive part group B are controlled to enable non-resonant driving for obtaining a desired deflection angle.

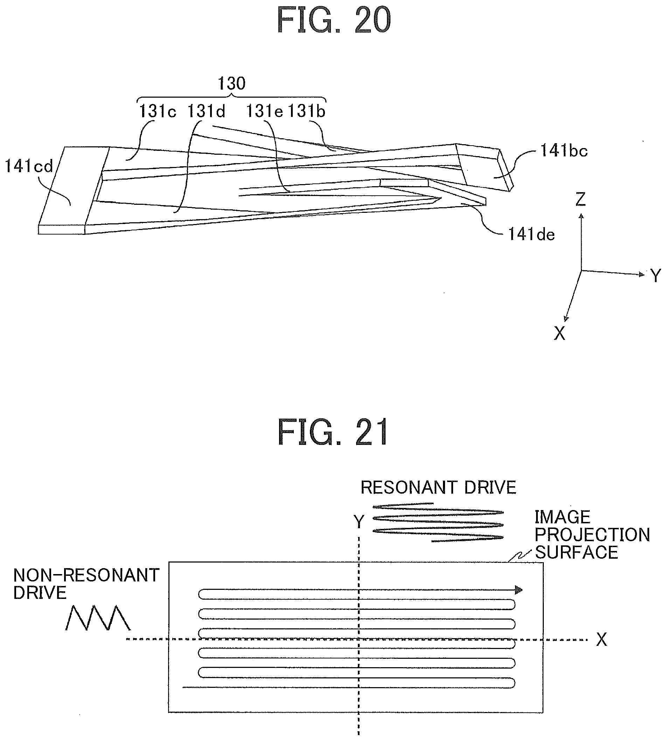

However, the second drive parts also have a resonant frequency inherent in the structure itself, in particular, for example, a vibration mode in which the cantilevers of the second piezoelectric actuation parts 131a to 131f and 132a to 132f are distorted about the Y-axis as a rotation axis. FIG. 20 illustrates a distortion behavior of each cantilever in the silicon active layer, which forms the second piezoelectric actuation part, about the center of the Y-axis. This motion is reinforced when the coupling parts 141ab to 141ef and 142ab to 142ef, which serve as a support end of the second piezoelectric actuation part, is vibrated in the +Z-direction.

A distortion vibration mode of the second drive part is superimposed on a rotation about the Y-axis, i.e., a rotation of the first drive part about the first axis, which becomes vibration crosstalk of the two-axis operation.

As illustrated in FIG. 21, the first drive part and the second drive part are simultaneously operated to allow the light reflected by the mirror part 101 to depict a two-dimensional scanning locus. As a result, the optical scanning device as illustrated in FIG. 1 can be implemented. To design a movable device as a light deflector with a higher performance, it is desirable that the deflection angle of the mirror part 101 has a higher sensitivity to a voltage and a large deflection angle can be obtained. On the other hand, a disadvantage with crosstalk in the two-axis operation becomes conspicuous as the deflection angle of the mirror part increases. This results in causing adverse effects such as a deterioration of the image quality due to an unintended scanning line fluctuation, a deviation of the optical axis of irradiation light, and vulnerability to an environment vibration. To implement the light deflector, the optical scanning device, the image projection device, the light writing device, the image forming device, and the object recognition device with a high quality and high reliability, it is desirable to reduce vibration components other than an untended motion in the first drive part and the second drive part.

In the first piezoelectric actuation part and the second piezoelectric actuation part, the piezoelectric part is sandwiched between the upper electrode and the lower electrode, which serves as the drive source. Further, an electric wire is coupled to the drive source to implement a function as a piezoelectric actuator. At this time, it is desirable that the drive source composed of the piezoelectric part 220, the upper electrode 230, and the lower electrode 210 has a large area, while the presence of the drive source in a member corresponding to a support frame of the drive part may induce an unintended vibration in the first drive part and the second drive part, which may generate vibration crosstalk.

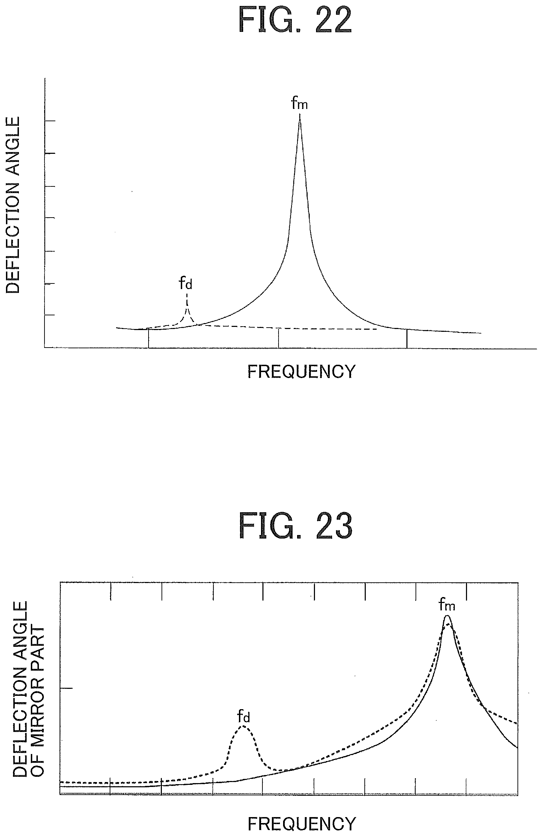

FIG. 22 is a schematic view illustrating a Peak of resonant sensitivity corresponding to the rotation of the mirror part 101 by the first drive part and a crosstalk peak of a distortion vibration in the second drive part. fm represents a resonant frequency observed assuming the deflection angle of the mirror part 101 is a vertical axis when the first drive part is driven, and fd represents a resonant frequency obtained by observing vibration crosstalk caused due to a distortion vibration when the second drive part is driven, assuming that the deflection angle of the mirror part 101 is a vertical axis.

When the vibration mode and the frequency as illustrated in FIG. 22 are present, a resonant peak of the light deflector of the related art is compared with a resonant peak of the movable device 13 serving as the light deflector of this embodiment as illustrated in FIG. 23. Like FIG. 22, FIG. 23 illustrates resonant frequency characteristics of the deflection angle of the mirror part. A solid line indicates a frequency dependence of the resonant deflection angle in one example of this embodiment, and a broken line indicates a frequency dependence of the resonant deflection angle in the related art. In one example of this embodiment, the peak value of fd can be reduced, and vibration crosstalk generated in the two-axis operation of the light deflector can be reduced.

Since the result as illustrated in FIG. 23 is obtained, the light deflector can secure independent rotation operations in two-dimensional directions, and the use of the piezoelectric cantilever region of the drive part can be optimized.

The piezoelectric actuator (the first piezoelectric actuation part and the second piezoelectric actuation part) of this embodiment described above includes the cantilever (beam) having one end coupled to the first member, and another end coupled to the second member; the lower electrode 210 (first electrode) provided on at least the cantilever; the piezoelectric part 220 (piezoelectric body) provided on the lower electrode 210; and the upper electrode 230 (second electrode) provided on the piezoelectric part 220. The lower electrode 210 projects above at least one of the first and second members. Examples of the first and second members include the torsion bars 111a and 111b, the first support part 120, the coupling part, and the second support part 150.

In this case, a wire can be coupled to the lower electrode 210 which projects above at least one of the first and second members, without providing the drive source composed of the lower electrode 210, the piezoelectric part 220, and the upper electrode 230 on the first and second members.

Thus, the generation of an unwanted excitation vibration can be suppressed and a desired drive force can be obtained.

As a result, according to the piezoelectric actuator of this embodiment, a desired power performance (drive performance) can be stably obtained.

The piezoelectric part 220 projects above at least one of the first and second members, and the second electrode does not project above at least one of the first and second members.

The projecting part (lower electrode projecting part) of the lower electrode 210 has a region in which the projecting part (piezoelectric part projecting part) of the piezoelectric part 220 is not provided, and a wire may be coupled to the region.

At least two of the upper electrode 230, the lower electrode 210, and the piezoelectric part 220 have a non-similar shape. That is, at least two of the upper electrode 230, the lower electrode 210, and the piezoelectric part 220 have shapes that are different from each other.

The part provided on the cantilever of the piezoelectric part 220 is larger than the projecting part (piezoelectric part projecting part) of the piezoelectric part 220.

The part provided on the cantilever of the lower electrode 210 is larger than the projecting part (lower electrode projecting part) of the lower electrode 210.

The cantilever may be provided with a vibration sensor for detecting a vibration of the cantilever. This vibration sensor can be implemented by a structure similar to the piezoelectric actuator of this embodiment.

The piezoelectric actuator of this embodiment can be applied not only to a light deflector and a vibration sensor, but also to general devices utilizing the piezoelectric effect.

According to the movable device 13 including the piezoelectric actuator of this embodiment, the torsion bar coupled to one end of the cantilever of the piezoelectric actuator, the support part 120 that supports another end of the cantilever, and the mirror part 101 coupled to the torsion bar, a desired deflection angle can be obtained and a light deflector with high operation reliability can be implemented.

According to the movable device 13 including the drive system including the plurality of piezoelectric actuators of this embodiment in which the cantilevers are coupled via the coupling part so as to form a meander structure (meander shape) as a whole; the movable system (movable system) about the second axis that includes the mirror part 101 and is coupled to one end of the drive system; and the second support part 150 that supports another end of the drive system, a desired deflection angle can be obtained and a light deflector with high operation reliability can be implemented.

The movable system may further include the torsion bar coupled to the mirror part 101; the piezoelectric actuator of this embodiment in which one end of the cantilever is coupled to the torsion bar; and the support part 120 that supports another end of the cantilever. In this case, a desired deflection angle can be obtained and a two-axis light deflector with high operation reliability can be implemented.

The optical scanning device (for example, the light writing device 600) of this embodiment is an optical scanning device that scans an object with light, and includes the light source device 12, and the movable device 13 serving as a light deflection element that deflects light from the light source device 12.

In this case, an object can be stably scanned with light with high accuracy.

The laser printer 650 serving as the image forming device of this embodiment includes the photosensitive drum (image carrier), and the light writing device 600 that scans the scanned surface 15, which is the surface of the photosensitive drum, with light.

In this case, the quality of an image formed on the scanned surface 15 can be improved.

Note that the light writing device 600 can also be applied to image forming devices such as a color printer or a color copier including a plurality of photosensitive drums. Such color image forming devices may be provided with, for example, a plurality of movable devices 13 respectively corresponding to a plurality of photosensitive drums.

The head-up display device 500 serving as the image projection device of this embodiment includes the intermediate screen 510 on which light from the optical scanning device including the light source device 12 and the movable device 13 is emitted to form an image, and the projection mirror 511 (optical system) that projects light forming an image via the intermediate screen 510.

In this case, the quality of the projected image can be improved.

The object recognition device (laser radar device) of this embodiment includes the projection system including the optical scanning device including the light source device 12 and the movable device 13; and the light receiving system that receives light which is projected from the projection system and is reflected or scattered by the subject 702 (object).

In this case, the subject 702 can be stably recognized with high accuracy.

A movable body device including at least one of the image projection device and the object recognition device of this embodiment, and a movable body on which the at least one of the image projection device and the object recognition device is mounted may be implemented.

For example, a thermoreversible recording medium (for example, a rewritable label) may be irradiated with light from the optical scanning device including the light source device 12 and the movable device 13 to perform optical scanning the thermoreversible recording medium and perform at least one of recording and deletion of an image.

The device that performs recording or deletion of an image as described above can be used as an image rewrite device, an image recording device, or an image deletion device using a thermoreversible recording medium as an object. In this case, recording or deletion of an image can be stably performed with high accuracy on thermoreversible recording media.

The back of an eye may be irradiated with light from the optical scanning device including the light source device 12 and the movable device 13 to perform optical scanning on the back of the eye, and light reflected or scattered by the back of the eye may be analyzed by analysis means.

Thus, the back of an eye may be irradiated with light (for example, low-intensity infrared light) and the returned light may be analyzed to provide a tomogram of a retina. Such a device is called an "optical coherence tomography", and is used for diagnosis of age-related macular degeneration, macular edema, or macular hole, or for checking the state of an optic nerve fiber in glaucoma.

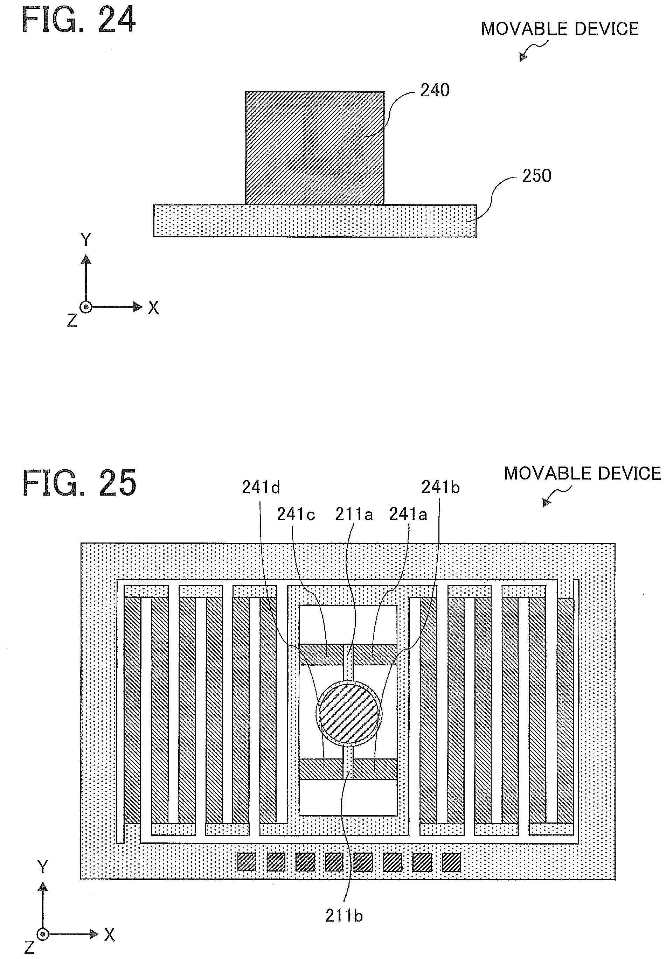

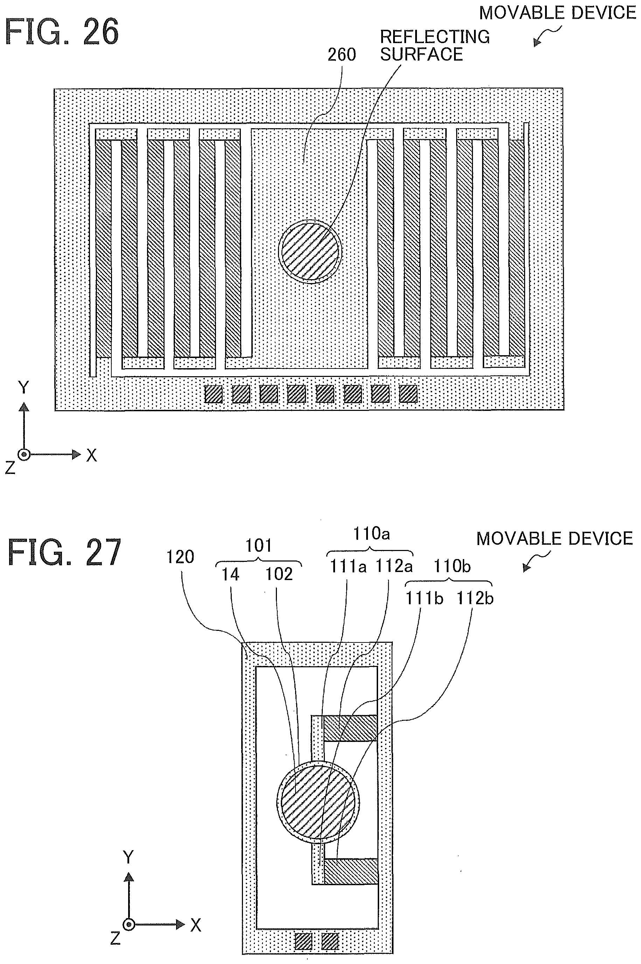

In the above embodiments, as illustrated in FIG. 12, the movable device 13 uses the cantilever type movable device in which the first piezoelectric actuation parts 112a and 112b extend in the +X direction from the torsion bars 111a and 111b. However, the structure of the movable device is no limited to this, as long as the structure allows the piezoelectric part to which a voltage is applied to be movable. For example, as in the example illustrated in FIG. 24, a movable device in which one end of the beam of the drive part 240 serving as the piezoelectric actuator is coupled to the support part 250 as a fixed end. Further, as illustrated in FIG. 25, a movable device of a double fixed beam time including drive parts 241a and 241b extending in the +X direction from torsion bars 211a and 211b, respectively, and drive parts 241c and 241d extending in the -X direction may be used. Further, when the reflecting surface is allowed to be movable about one axis, as illustrated in FIG. 26, the movable part 260 may be provided with the reflecting surface 14. Further, as illustrated in FIG. 27, a movable device in which the reflecting surface 14 is allowed to be movable only about one axis by the mirror part 101, the first drive parts 110a and 110b, and the support part 120 may be used.

In the mirror part 101, the -Z-side surface of the mirror part base 102 may be provided with a rib for reinforcing the mirror part. The rib is formed of, for example, the silicon support layer 171 and the silicon oxide layer 172, and can suppress a distortion of the reflecting surface 14 caused due to mobility.

Note that in the above embodiment, the drive source including the piezoelectric body and two electrodes sandwiching the piezoelectric body are prevented from being provided on the first support part 120 and on the coupling part so as to suppress an unwanted excitation vibration. However, there is a concern that an unwanted excitation vibration is generated also when such a drive source is provided on the torsion bar.

However, even when only at least one of the lower electrode 210 and the piezoelectric part 220 projects above the torsion bar, the drive source is not provided on the torsion bar, which causes no disadvantage.

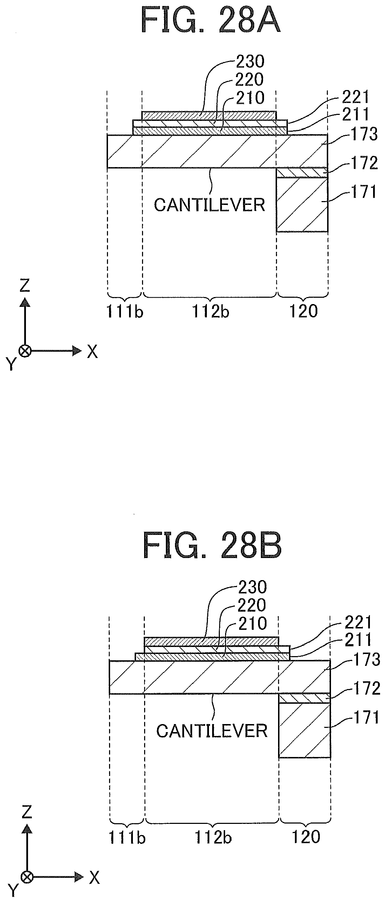

In the above embodiments, the lower electrode 210 and the piezoelectric part 220 project only above the support part 120 in the first piezoelectric actuation part. However, in addition, for example, as illustrated in FIG. 28A, the lower electrode 210 and the piezoelectric part 220 may also project above the torsion bar, or, for example, as illustrated in FIG. 28B, only the lower electrode 210 may project above the torsion bar.

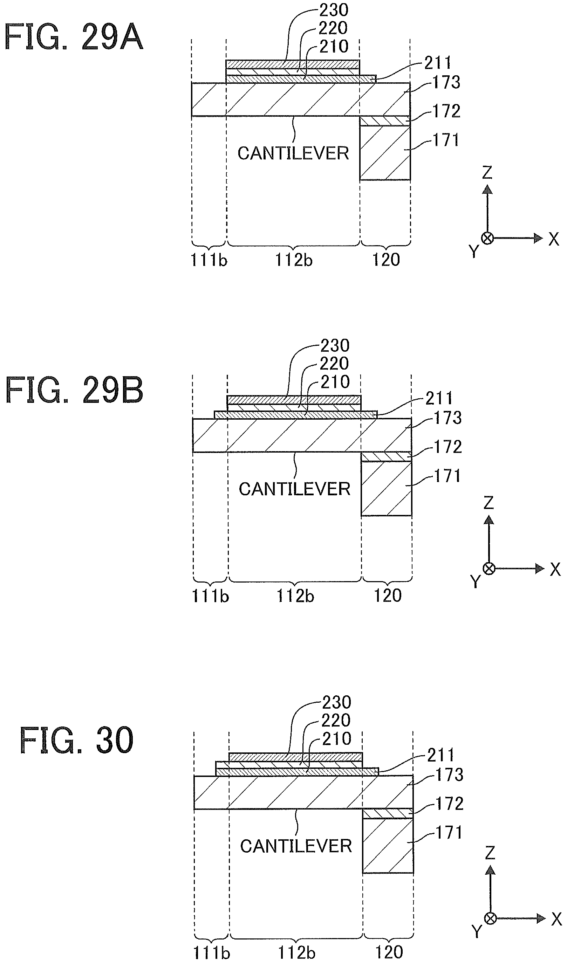

In the above embodiments, the lower electrode 210 and the piezoelectric part 220 project only above the support part 120 in the first piezoelectric actuation part. Alternatively, for example, as illustrated in FIG. 29A, only the lower electrode 210 may project above only the support part 120, or, for example, as illustrated in FIG. 29B, only the lower electrode 210 may project above the support part 120 and the torsion bar.

In the above embodiments, the lower electrode 210 and the piezoelectric part 220 project only above the support part 120 in the first piezoelectric actuation part. Alternatively,
for example, as illustrated in FIG. 30, only the lower electrode 210 may project above the support part 120 and the lower electrode 210 and the piezoelectric part 220 may project above the torsion bar.

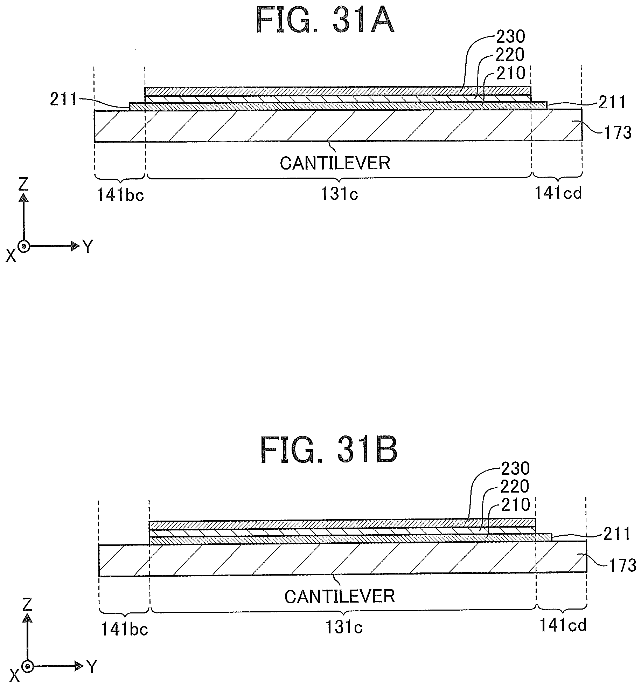

In the above embodiments, the lower electrode 210 and the piezoelectric part 220 project above two coupling parts at both ends in the second piezoelectric actuation part. Alternatively, for example, as illustrated in FIG. 31A, only the lower electrode 210 may project above the coupling parts at both ends, or, for example, as illustrated in FIG. 31B, only the lower electrode 210 may project only above one of the coupling parts.

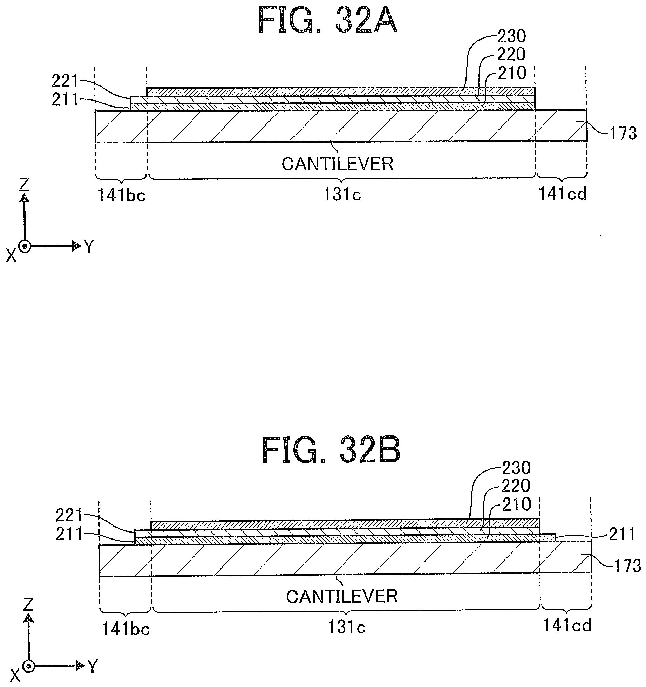

In the above embodiments, the lower electrode 210 and the piezoelectric part 220 project above two coupling parts at both ends in the second piezoelectric actuation part. Alternatively, for example, as illustrated in FIG. 32A, the lower electrode 210 and the piezoelectric part 220 may project only above one of the coupling parts, or, for example, as illustrated in FIG. 32B, the lower electrode 210 may project above the coupling parts at both ends and the piezoelectric part 220 may project only above one of the coupling parts.

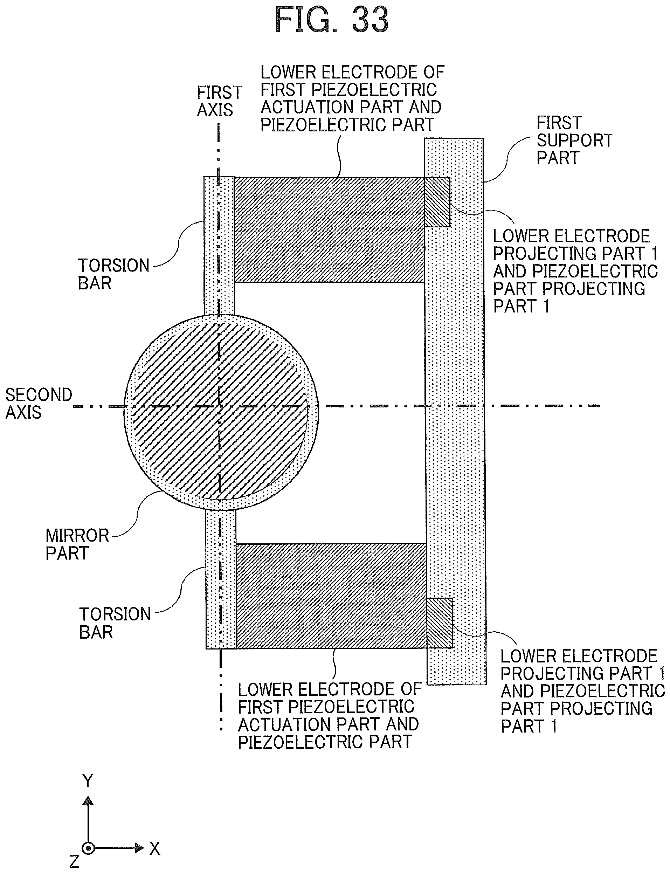

As illustrated in FIG. 33, the lower electrode and the piezoelectric part of the first piezoelectric actuation part may be provided so as to project above the first support part. In this case, as illustrated in FIG. 33, the lower electrode and the piezoelectric part may project above the first support part so as to be line-symmetric to the second axis. In this case, there is no difference in distance from the second axis between the positions where a distortion occurs, so that symmetry is obtained. As a result, the generation of excitation due to a rotation component about the second axis perpendicular to the first axis, which is the rotation axis of the mirror part, on the mirror part can be suppressed. Note that in FIG. 33, only the lower electrode may project above the first support part.

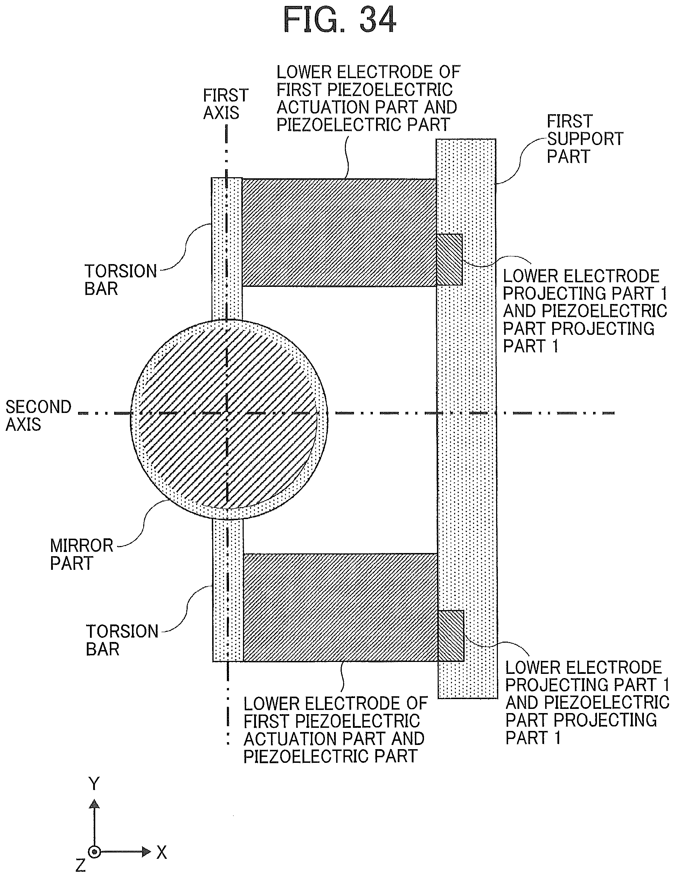

On the other hand, when the lower electrode and the piezoelectric part project above the first support part so as to be asymmetric to the second axis like in Comparative Example illustrated in FIG. 34, there is a difference from the second axis between the positions where a distortion occurs, so that the symmetry cannot be obtained. As a result, excitation due to the rotation component about the second axis can be easily generated on the mirror part.

## Claims

1. A piezoelectric actuator comprising:
a beam having one end coupled to a member;
a first electrode (210) provided on at least the beam;
a piezoelectric body (220) provided on the first electrode (210); and
a second electrode (230) provided on the piezoelectric body (220),
wherein the first electrode (210) projects above the member, thereby defining a projecting part (211) of the first electrode (210), and
a part of the first electrode (210) that is provided on the beam is longer along the direction of the projection than the projecting part (211) the first electrode (210), and wherein the piezoelectric body (220) projects above the member, thereby defining a projecting part (221) of the piezoelectric body (220), and
a part of the piezoelectric body (220) that is provided on the beam is longer along the direction of projection than the projecting part (221) of the piezoelectric body (220),
**characterized in that**
the second electrode (230) does not project above the member.

2. The piezoelectric actuator according to claim 1, wherein a projecting part (211) of the first electrode (210) projecting above the member has a region in which the projecting part (221) of the piezoelectric body (220) is not provided, the region being coupled to a wire.

3. The piezoelectric actuator according to claim 2, wherein the first electrode (210) and the piezoelectric body (220) have shapes that are different from each other.

4. A light deflector comprising:
the piezoelectric actuator according to any one of claim 1 to 3;
a torsion bar (111a, 111b, 211a, 211b) having one end coupled to the beam of the piezoelectric actuator;
a support part (120, 150, 250) coupled to another end of the beam; and
a mirror part (101) coupled to the torsion bar (111a, 111b, 211a, 211b).

5. A light deflector comprising:
a drive system including a plurality of piezoelectric actuators, each piezoelectric actuator being the piezoelectric actuator according to any one of claim 1 to 3, wherein the beams of the plurality of piezoelectric actuators are coupled to each other through a coupling part (141ab to 141ef, 142ab to 142ef) so as to form a meander structure as a whole;
a movable system coupled to one end of the drive system and including a mirror part (101); and
a support part (120, 150, 250) configured to support another end of the drive system.

6. The light deflector according to claim 5, wherein
the movable system further includes:
a torsion bar (111a, 111b, 211a, 211b) coupled to the mirror part (101);
the piezoelectric actuator according to any one of Claim 1 to 6, one end of the beam being coupled to the torsion bar (111a, 111b, 211a, 211b); and
another support part (120, 150, 250) coupled to another end of the beam.

7. An image projection device comprising:
a light source device (12);
the light deflector according to any one of claims 4 to 5, the light deflector being configured to deflect light from the light source device (12);
a screen (510) on which light passing through the light deflector is emitted to form an image; and
an optical system (511) configured to project light through the screen (510).

## Patentansprüche

1. Piezoelektrischer Aktuator, enthaltend:
einen Balken, der ein an ein Glied gekoppeltes Ende aufweist;
eine erste Elektrode (210), die wenigstens auf dem Balken vorgesehen ist;
einen piezoelektrischen Körper (220), der auf der ersten Elektrode (210) vorgesehen ist; und eine zweite Elektrode (230), die auf dem piezoelektrischen Körper (220) vorgesehen ist, wobei die erste Elektrode (210) oberhalb des Glieds vorsteht, wodurch sie ein Vorsprungteil (211) der ersten Elektrode (210) definiert, und
ein Teil der ersten Elektrode (210), der auf dem Balken vorgesehen ist, länger entlang der Richtung des Vorsprungs als das Vorsprungsteil (211) der ersten Elektrode (210) ist und wobei der piezoelektrische Körper (220) oberhalb des Glieds ein Vorsprungteil (221) des piezoelektrischen Körpers (220) definiert; und
ein Teil des piezoelektrischen Körpers (220) der auf dem Balken vorgesehen ist, länger entlang der Richtung des Vorsprungs als das Vorsprungteil (221) des piezoelektrischen Körpers (220) ist,
**dadurch gekennzeichnet, dass**
die zweite Elektrode nicht oberhalb des Glieds hervorsteht.

2. Piezoelektrischer Aktuator gemäß Anspruch 1, bei dem ein Vorsprungteil (211) der ersten Elektrode (210), das oberhalb des Glieds hervorsteht, einen Bereich aufweist, in dem das Vorsprungteil (221) des piezoelektrischen Körpers (220) nicht vorgesehen ist, wobei der Bereich mit einem Draht verbunden ist.

3. Piezoelektrischer Aktuator gemäß Anspruch 2, bei dem die erste Elektrode (210) und der piezoelektrische Körper (220) Gestalten aufweisen, die sich voneinander unterscheiden.

4. Lichtdeflektor, enthaltend:
den piezoelektrischen Aktuator gemäß irgendeinem der Ansprüche 1 bis 3;
eine Torsionsstange (111a, 111b, 211a, 211b), die ein Ende aufweist, das an den Balken des piezoelektrischen Aktuators gekoppelt ist;
ein Stützteil (120, 150, 250), das an das hintere Ende des Balkens gekoppelt ist; und
ein Spiegelteil (101), das an die Torsionsstange (111a, 111b, 211a, 211b) gekoppelt ist.

5. Lichtdeflektor, enthaltend:
ein Antriebssystem, das eine Mehrzahl piezoelektrischer Aktuatoren enthält, wobei jeder piezoelektrische Aktuator der piezoelektrische Aktuator gemäß irgendeinem der Ansprüche 1 bis 3, wobei die Balken der Mehrzahl piezoelektrischer Aktuatoren miteinander durch ein Kopplungsteil (141ab bis 141ef, 142ab bis 142ef) so gekoppelt sind, dass sie insgesamt eine Meanderstruktur bilden;
ein bewegliches System, das an ein Ende des Antriebssystems gekoppelt ist und ein Spiegelteil (101) enthält; und
ein Stützteil (120, 150, 250), das eingerichtet ist, ein anderes Ende des Antriebssystems zu stützen.

6. Lichtreflektor gemäß Anspruch 5, bei dem
das bewegliche System ferner enthält:
eine Torsionsstange (111a, 111b, 211a, 211b), die mit dem Spiegelteil (101) gekoppelt ist;
den piezoelektrischen Aktuator gemäß irgendeinem der Ansprüche 1 bis 6, wobei ein Ende des Balkens mit der Torsionsstange (111a, 111b, 211a, 211b) gekoppelt ist; und
ein anderes Stützteil (120, 150, 250), das mit einem anderen Ende des Balkens gekoppelt ist.

7. Bildprojektionsvorrichtung, enthaltend:
eine Lichtquellenvorrichtung (12);
den Lichtdeflektor gemäß irgendeinem der Ansprüche 4 bis 5, wobei der Lichtdeflektor eingerichtet ist, Licht von der Lichtquellenvorrichtung (12) abzulenken;
einen Bildschirm (510), auf dem durch den Lichtdeflektor hindurchgehendes Licht emittiert wird, um ein Bild zu bilden; und
ein optisches System (511), das eingerichtet ist, Licht durch den Bildschirm (510) hindurch zu projizieren.

## Revendications

1. Actionneur piézoélectrique, comprenant :
une poutre ayant une extrémité couplée à un élément ;
une première électrode (210) prévue sur au moins la poutre ;
un corps piézoélectrique (220) prévu sur la première électrode (210) ; et
une seconde électrode (230) prévue sur le corps piézoélectrique (220),
dans lequel la première électrode (210) fait saillie au-dessus de l'élément, ainsi définissant une partie saillante (211) de la première électrode (210), et
une partie de la première électrode (210) qui est prévue sur la poutre est plus longue, le long de la direction de la saillie, que la partie saillante (211) de la première électrode (210), et
dans lequel le corps piézoélectrique (220) fait saillie au-dessus de l'élément, ainsi définissant une partie saillante (221) du corps piézoélectrique (220), et
une partie du corps piézoélectrique (220) qui est prévue sur la poutre est plus longue, le long de la direction de saillie, que la partie saillante (221) du corps piézoélectrique (220),
**caractérisé en ce que**
la seconde électrode (230) ne fait pas saillie au-dessus de l'élément.

2. Actionneur piézoélectrique selon la revendication 1, dans lequel une partie saillante (211) de la première électrode (210) faisant saillie au-dessus de l'élément a une région dans laquelle la partie saillante (221) du corps piézoélectrique (220) n'est pas prévue, la région étant couplée à un fil.

3. Actionneur piézoélectrique selon la revendication 2, dans lequel la première électrode (210) et le corps piézoélectrique (220) ont des formes qui sont différentes l'une de l'autre.

4. Déflecteur de lumière, comprenant :
l'actionneur piézoélectrique selon l'une quelconque des revendications 1 à 3 ;
une barre de torsion (111a, 111b, 211a, 211b) ayant une extrémité couplée à la poutre de l'actionneur piézoélectrique ;
une partie de support (120, 150, 250) couplée à une autre extrémité de la poutre ; et
une partie à miroir (101) couplée à la barre de torsion (111a, 111b, 211a, 211b).

5. Déflecteur de lumière, comprenant :
un système d'entraînement incluant une pluralité d'actionneurs piézoélectriques, chaque actionneur piézoélectrique étant l'actionneur piézoélectrique selon l'une quelconque des revendication 1 à 3, dans lequel les poutres de la pluralité d'actionneurs piézoélectriques sont couplées les unes aux autres par l'intermédiaire d'une partie de couplage (141ab à 141ef, 142ab à 142ef) afin de former une structure sinueuse dans l'ensemble ;
un système mobile couplé à une extrémité du système d'entraînement et incluant une partie à miroir (101) ; et
une partie de support (120, 150, 250) configurée pour supporter une autre extrémité du système d'entraînement.

6. Déflecteur de lumière selon la revendication 5, dans lequel
le système mobile inclut en outre :
une barre de torsion (111a, 111b, 211a, 211b) couplée à la partie à miroir (101) ;
l'actionneur piézoélectrique selon l'une quelconque des revendication 1 à 6, une extrémité de la poutre étant couplée à la barre de torsion (111a, 111b, 211a, 211b) ; et
une autre partie de support (120, 150, 250) couplée à une autre extrémité de la poutre.

7. Dispositif de projection d'image, comprenant :
un dispositif à source de lumière (12) ;
le déflecteur de lumière selon l'une quelconque des revendications 4 à 5, le déflecteur de lumière étant configuré pour défléchir de la lumière provenant du dispositif à source de lumière (12) ;
un écran (510) sur lequel de la lumière passant à travers le déflecteur de lumière est émise pour former une image ; et
un système optique (511) configuré pour projeter de la lumière à travers l'écran (510).
